(19)

**Europäisches Patentamt**
**European Patent Office**
**Office européen des brevets**

(11) **EP 4 513 445 A1**

(12) **EUROPEAN PATENT APPLICATION**

(43) Date of publication:
**26.02.2025 Bulletin 2025/09**

(21) Application number: **23192562.9**

(22) Date of filing: **22.08.2023**

(51) International Patent Classification (IPC):
*G06V 10/774* (2022.01)   *G06V 10/82* (2022.01)
*G06V 20/68* (2022.01)

(52) Cooperative Patent Classification (CPC):
**G06V 20/68; G06V 10/774; G06V 10/82**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **BASF SE**
**67056 Ludwigshafen am Rhein (DE)**

(72) Inventors:
• **Eguskiza, Itziar**
  **48160 Derio (Bizkaia) (ES)**
• **Picon Ruiz, Artzai**
  **48160 Derio (Bizkaia) (ES)**
• **Bereciartua-Perez, Aranzazu**
  **48160 Derio (Bizkaia) (ES)**

• **Gomez Zamanillo, Laura**
  **48160 Derio (Bizkaia) (ES)**
• **Espejo Perez, Rocio**
  **41710 Utrera (ES)**
• **Benito del Valle, Leire**
  **48160 Derio (Bizkaia) (ES)**
• **Eggers, Till**
  **67056 Ludwigshafen am Rhein (DE)**
• **Klukas, Christian**
  **67117 Limburgerhof (DE)**
• **Navarra-Mestre, Ramon**
  **67117 Limburgerhof (DE)**
• **Stein, Martin Lorenz**
  **67056 Ludwigshafen (DE)**

(74) Representative: **BASF IP Association**
**BASF SE**
**GBI - Z078**
**67056 Ludwigshafen (DE)**

(54) **METHOD FOR GENERATING A SYNTHETIC IMAGE OF AN OBJECT**

(57)    Computer-implemented method for generating a synthetic image of an object having at least one regression state, comprising: receiving at least one regression value, wherein the at least one regression value describes the at least one regression state of the object; providing a trained algorithm configured to provide an output image of an object in at least one regression state based on at least one regression value; applying the trained algorithm on the at least one regression value, wherein the output of the trained algorithm is an output image of the object in the at least one regression state.

FIG. 2

**EP 4 513 445 A1**

## Description

### TECHNICAL FIELD

The present disclosure relates to a computer-implemented method for generating a synthetic image of an object, a method for training an algorithm to generate a synthetic image of an object, a system for generating a synthetic image of an object, a corresponding computer program element and a use of synthetic images of an object as training data.

### TECHNICAL BACKGROUND

The present disclosure relates to the field of object state recognition. In particular, the background of the present disclosure is the automatic recognition and treatment of plant diseases in an agricultural field.

Crops of plants are susceptible to several plant diseases. Plant diseases in crop production systems can have a significant impact on agriculture, such as causing losses in crop yields and/or impairing product quality. Accordingly, plant disease management plays a critical role in mitigating crop losses and ensuring the production of high-quality food. Traditionally, the assessment of plant diseases and disease stages is performed by experts through visual inspection in the agricultural field. However, these expert assessments are often expensive, laborious and time-consuming. Furthermore, different assignment criteria may be used by different experts or even the same expert at different times, leading to an unwanted variance in assessment.

It has become apparent that an automatic prediction of plant disease stages could help to reduce the personal effort required and lead to more objectivity in results. While machine learning approaches have emerged as ways to capture and understand complex patterns, training of corresponding algorithms typically requires large amounts of labelled training data, which are often not readily available.

### SUMMARY

In one aspect of the present disclosure, a computer-implemented method for generating a synthetic image of an object having at least one regression state, comprising:

> receiving at least one regression value, wherein the at least one regression value describes the at least one regression state of the object;
> providing a trained algorithm configured to provide an output image of an object in at least one regression state based on at least one regression value;
> applying the trained algorithm on the at least one regression value, wherein the output of the trained algorithm is an output image of the object in the at least one regression state.

A further aspect of the present disclosure relates to a computer-implemented method for training an algorithm to generate a synthetic image of an object having at least one regression state, comprising:

> providing an algorithm;
> receiving training data comprising regression training sets, wherein the regression training sets comprising a reference image and at least one regression value, respectively, wherein the reference images of the sets depict objects in different regression states and the regression values describe the regression states;
> training the algorithm with the training data to generate output images of objects in a regression state corresponding to at least one input regression value.

A further aspect of the present disclosure relates to a computer-implemented method for training an algorithm to recognize a regression state of an object, comprising:

> providing an algorithm;
> training the algorithm with images of objects having a regression state,
> wherein at least some of the images of the objects are synthetic images generated with a method as described herein.

A further aspect of the present disclosure relates to a computer-implemented method for recognizing a regression state of an object, comprising:

> receiving an image of the object;
> providing a trained algorithm that is trained according to a method as described herein;

applying the provided trained algorithm on the image of the object, wherein the output of the trained algorithm is an estimated regression state of the object.

A further aspect of the present disclosure relates to a computer-implemented method for providing application data for applying an agricultural product on an agricultural field, comprising:

applying the method for recognizing a regression state of an object as described above and/or herein, wherein the object is a plant or part of a plant and the regression state is a level of progression of a disease, in order to determine a disease level of a plant or part of a plant of the agricultural field;

providing application data for applying an agricultural product on the agricultural field at least based on the determined disease level of the plant or part of the plant of the agricultural field.

A further aspect of the present disclosure relates to system for generating an image of an object, in particular a synthetic plant image of a plant or a part of a plant, having at least one regression state, comprising: a processing circuitry; a storage medium; and a data interface;

wherein the storage medium comprises a computer program that comprises instructions which when the program is executed, cause the processing circuitry to carry out the method for generating a synthetic image of an object as described herein;

wherein the data interface is configured to receive input for the trained algorithm including the at least one regression value.

A further aspect of the present disclosure relates to a system for providing application data for applying an agricultural product on an agricultural field, comprising:

a processing circuitry; a storage medium; and a data interface;

wherein the storage medium comprises a computer program that comprises instructions which when the program is executed, cause the processing circuitry to carry out the method for providing application data for applying an agricultural product as described herein;

wherein the data interface is configured to receive an image of a plant or a part of a plant and output application data for applying the agricultural product on the agricultural field.

A further aspect of the present disclosure relates to an apparatus for generating a synthetic image of an object having at least one regression state, the apparatus comprising: one or more computing nodes; and one or more computer-readable media having thereon computer-executable instructions that are structured such that, when executed by the one or more computing nodes, cause the apparatus to perform the following steps:

receiving at least one regression value, wherein the at least one regression value describes the at least one regression state of the object;

providing a trained algorithm configured to provide an output image of an object in at least one regression state based on at least one regression value;

applying the trained algorithm on the at least one regression value, wherein the output of the trained algorithm is an output image of the object in the at least one regression state.

A further aspect of the present disclosure relates to an apparatus for training an algorithm to generate a synthetic image of an object having at least one regression state, the apparatus comprising: one or more computing nodes; and one or more computer-readable media having thereon computer-executable instructions that are structured such that, when executed by the one or more computing nodes, cause the apparatus to perform the following steps:

receiving training data comprising regression training sets, wherein the regression training sets comprising a reference image and at least one regression value, respectively, wherein the reference images of the sets depict objects in different regression states and the regression values describe the regression states;

training the algorithm with the training data to generate output images of objects in a regression state corresponding to at least one input regression value.

A further aspect of the present disclosure relates to an apparatus for training an algorithm to recognize a regression state of an object, the apparatus comprising: one or more computing nodes; and one or more computer-readable media having thereon computer-executable instructions that are structured such that, when executed by the one or more computing nodes, cause the apparatus to perform the following steps:

   providing an algorithm;
   training the algorithm with images of objects having a regression state,
   wherein at least some of the images of the objects are synthetic images generated with a method for generating a synthetic image of an object as described herein.

A further aspect of the present disclosure relates to an apparatus for recognizing a regression state of an object, the apparatus comprising: one or more computing nodes; and one or more computer-readable media having thereon computer-executable instructions that are structured such that, when executed by the one or more computing nodes, cause the apparatus to perform the following steps:

   receiving an image of the object;
   providing a trained algorithm that is trained according to the method described herein;
   applying the provided trained algorithm on the image of the object, wherein the output of the trained algorithm is an estimated regression state of the object.

A further aspect of the present disclosure relates to an apparatus for providing application data for applying an agricultural product on an agricultural field, the apparatus comprising: one or more computing nodes; and one or more computer-readable media having thereon computer-executable instructions that are structured such that, when executed by the one or more computing nodes, cause the apparatus to perform the following steps:

   applying the method for recognizing a regression state of an object as described herein, wherein the object is a plant or part of a plant and the regression state is a level of progression of a disease, in order to determine a disease level of a plant or part of a plant of the agricultural field;
   providing application data for applying an agricultural product on the agricultural field at least based on the determined disease level of the plant or part of the plant of the agricultural field.

A further aspect of the present disclosure relates to a computer program element with instructions, which, when executed on computing devices of a computing environment, is configured to carry out the steps of at least one of the methods as described herein in a system as described herein and/or one of the apparatuses according as described herein.

A further aspect of the present disclosure relates to a computer-readable storage medium, in particular non-transient storage medium, comprising instructions which, when executed by a computer, cause the computer to carry out at least one of the methods as described herein.

A further aspect of the present disclosure relates to an application device for applying an agricultural product on an agricultural field, wherein the application device is controlled at least based on application data provided by a method for providing application data for applying an agricultural product as described herein, a system for providing application data as described herein and/or an apparatus providing application data for applying an agricultural product as described herein.

A further aspect of the present disclosure relates to the use of synthetic images of an object having at least one regression state generated with a method for generating a synthetic image of an object as described herein as training data for an algorithm to recognize a regression state of an object.

This and embodiments described herein relate to the methods, the systems, the apparatuses, the computer program element, the computer-readable storage medium, the application device, the use lined out above and vice versa. Advantageously, the benefits provided by any of the embodiments and examples equally apply to all other embodiments and examples and vice versa.

It is an object of the present disclosure to provide the means and/or the basis to enable or improve an automatization of the detection of a regression level of an object, in particular of a disease level of a plant. Furthermore, it is an object to enable an efficient treatment of a regression, in particular of a plant disease.

In particular, it is an object of the present disclosure to disclose a method for providing training data to train an algorithm to automatically detect a regression level. Moreover, it is a further object of the present disclosure to provide corresponding, apparatuses, systems, devices, computer program elements and/or use cases.

These and other objects, which become apparent upon reading the following description, are solved by the subject matters of the independent claims. The dependent claims refer to preferred embodiments of the present disclosure.

The method for generating a synthetic image of an object and the corresponding other aspects of the present disclosure, provide the means and/or an efficient basis for training an algorithm to automatically detect a regression level of an object, in particular a stage of disease of a plant. Advantageously, training images for such a detection algorithm are provided by training an algorithm to provide corresponding synthetic images that are conditioned with the regression value. This is achieved by using regression values as conditional input for image generation when training the corresponding algorithm (and during the application of the trained algorithm). The synthetic images can then be used as training data for the detection algorithm, in particular to improve the performance of the algorithm.

The term "object" as used herein is to be understood broadly in the present case and can describe any object that can be represented on an image. Within the context of the present disclosure, the term object may also comprise an organism or part of an organism such as a plant or part of a plant. For example, the object may be a leave of a plant. However, the method according to the present disclosure may generally be applied to any other object that can have some kind of regression stage, such as any other part of a plant, a piece of clothing, or a piece of furniture.

The term "synthetic image" as used herein is to be understood broadly in the present case and describes a visual medium, in particular an image, that is completely or partially created via an artificial production. A particular example of artificial production is the production or generation by a computer algorithm, such as an artificial intelligence algorithm. In this sense a synthetic image can be distinguished from a photographed image taken by a camera. Synthetic images may also be referred to as artificial images.

The term "output image" as used herein is to be understood broadly in the present case and can generally describe any image that is output by any of the described methods, e.g. as a final product or as an intermediate product of the corresponding method. The output image can in particular be a synthetic image.

The term "regression state" as used herein is to be understood broadly in the present case and can describe any state of an object, in particular plant, that may vary across different levels, i.e. that may have at least to different levels. There may be distinct levels of regression states or a continuum of regression states. An example of a regression state is a level of disease, e.g. corresponding to a particular progression of disease. Further examples are a level of water, an age, a quality level, a vigour of a plant, a growing stage, or any state of decay. The regression state may be described by a regression value. The regression value may in particular be a numeric value. Hence, a particular numeric value may be assigned to a particular state. The range of values the regression value may assume can be limited in some cases. One example are regression values that are within the range from 0 to 1. The precision of the values may be chosen differently according to the requirements and other factors, e.g. the available accuracy of a measurement. For example, the precision may lay in the first decimal place having values such as 0.1, 0.2 etc., or the precision may lay in the third decimal places having values such as 0.142, 0.363, 0.694 etc. The regression value may be chosen from a continuum of values or there may be a finite or infinite set of discrete values a regression value can assume. In some cases, a continuum of regression states may be translated into discrete regression values. For example, ranges of regression states (such as 0.001 to 0.200) may be summarized into one discrete regression value, e.g. a mean value (such as 0.1 for the range from 0.001 to 0.200).

The term "trained algorithm" as used herein is to be understood broadly in the present case. The algorithm may be a machine learning algorithm. The algorithm may comprise decision trees, naive bayes classifications, nearest neighbors, neural networks, convolutional or recurrent neural networks, transformers, generative adversarial networks, support vector machines, linear regression, logistic regression, random forest, gradient boosting algorithms and/or a diffusion model. Such an algorithm, in particular machine learning algorithm, is termed "intelligent" because it is capable of being "trained." The algorithm may be trained using records of training data. A record of training data comprises training input data and corresponding training output data. In the context of the present disclosure, training data may, for example be regression training sets, the sets comprising a reference image and at least one regression value. The regression values may be the training input data. The reference images may be the training output data. The training output data of a record of training data is the result that is expected to be produced by the algorithm when being given the training input data of the same record of training data as input. The deviation between this expected result and the actual result produced by the algorithm is observed and rated by means of a "loss function". This loss function is used as feedback for adjusting the parameters of the internal processing chain of the algorithm. For example, the parameters may be adjusted with the optimization goal of minimizing the values of the loss function that result when all training input data are fed into the algorithm and the outcome is compared with the corresponding training output data. The result of this training is that given a relatively small number of records of training data as "ground truth", the algorithm is enabled to perform its job well for a number of records of input data that is higher by many orders of magnitude.

The term "segmentation mask" as used herein is to be understood broadly in the present case. It typically defines an outline and/or shape of an object. For example, the segmentation mask may define the shape of a leave or of part of a leave. The segmentation mask may be a binary mask. A binary mask typically defines what area is part of an object and what area is not part of an object. For example, a binary mask may attribute an affirming value, e.g. the value 1, to all coordinates of an image that are within the object, a non-affirming value, e.g. the value 0, to all coordinate of an image that are outside the object. The dimension of the segmentation mask may preferably be chosen to correspond to the dimensions of an image the segmentation mask is used with. For example, when training an algorithm based on an image of dimension X×Y (such as 32×32) or X×Y×Z (such as 32×32×8), the segmentation mask may also be of dimension X×Y or X×Y×Z. In the context of the present disclosure, the segmentation mask may be used as training input data, preferably in addition to the regression values. By incorporating the segmentation mask, the generation of synthetic images based on predefined segmentation patterns can be enabled.

A segmentation mask may be generated according to any method as known in the state of the art. For example, a trained segmenting model may be used. The trained segmenting model may be a trained segmenting neural network, e.g. based on a U-net structure. The segmenting neural network may comprise a pixel-wise categorical cross-entropy loss function complemented by ta total variation term. However, other options are possible as well. For example, a method as described in T. F. Chan and L. A. Vese, "Active contours without edges," in IEEE Transactions on Image Processing, vol. 10, no. 2, pp. 266-277, Feb. 2001, doi: 10.1109/83.902291, or a method as described in A. Johannes and A. Picon, et al. "Automatic plant disease diagnosis using mobile capture devices, applied on a wheat use case", Computers and Electronics in Agriculture, Volume 138, 2017, Pages 200-209, ISSN 0168-1699, doi: 10.1016/j.compag.2017.04.013, may be applied or adapted for this purpose.

The term "diffusion model" as used herein is to be understood broadly in the present case. Diffusion models are generative models that can be used to generate new data such as new image data. Diffusion models are based on adding and removing noise on a given set of training sample data and consecutively, after training, generating new sample data from random noise. In the present disclosure, a diffusion model may be used to generate new images.

During training of the diffusion model, in a forward process (also referred to as diffusion process), a reference image is progressively noised. Therein, noise is added to the reference image at multiple timesteps on a multi-step chain, thereby gradually rendering the reference image increasingly noisy as time t progresses from 0 to T. The multi-step chain can in particular be a Markov chain. The Markov chain is a stochastic model, wherein variables of consecutive timesteps depend only on the previous or following timestep. Typically, the output of this forward process is a distribution that is completely noisy, i.e. the original signal is destroyed. The noise added in the timesteps may be Gaussian noise, i.e., the values the noise may assume are distributed according to a Gaussian function. Hence, a given data distribution is transformed into a Gaussian distribution via the Markov chain. However, other types of noise are also conceivable. The timesteps may be discrete timesteps. For example, the discrete timesteps may be denoted by integer values, e.g. ranging from 0 to the total number of timesteps T. For example, a number of time steps in the order of magnitude of 1000 timesteps may be used. The corresponding chain is typically referred to as a discrete-time Markov chain (DTMC). Alternatively, the timesteps may be continuous. For example, the continuous values may be values within the interval [0, 1] and noise may be added in infinitesimal intervals. A corresponding chain of such a continuous-time process is typically referred to as a continuous-time Markov chain (CTMC). One example of a diffusion model using discrete timesteps is a denoising diffusion probabilistic model (DDPM) as described in J. Ho, A. Jain, and P. Abbeel, "Denoising diffusion probabilistic models," Advances in Neural Information Processing Systems, vol. 33, pp. 6840-6851, 2020. In DDPM isotropic Gaussian noise is added and the amount of noise added in each timestep is controlled via by a variance schedule (also referred to as noise schedule). However, other variants of diffusion models, such as based on noise conditioned score networks or based on stochastic differential equations, are generally also possible. The forward process may employ fixed constants and, therefore, does not have to involve a learning process, itself. I.e., typically, no parameters of the forward process are adapted during the training.

Following the forward process, in a reverse process (also referred as to reverse diffusion process), moving in the opposite direction on the chain, a denoising network of the diffusion model is trained to gradually remove the noise in order to obtain a denoised image corresponding to the reference image. The denoising network is trained to remove the noise iteratively between consecutive timesteps of the multi-step chain, thereby reversing the application of noise. Hence, the reverse process inverts the forward process and gradually refines a sample of noise into an image. During the training, these reverse operations are approximated by adapting trainable parameters of the denoising network.

The reverse process may be associated with a conditioning label. The conditional label may comprise a conditional value. In the context of this disclosure, the conditional value may in particular be a regression value. Accordingly, the diffusion model may be trained to produce output images depicting an object with a regression state defined by the regression value.

Generally, any architecture can be used for the denoising network. Preferably, the input dimensionality of the denoising network is the same as the output dimensionality. For example, a U-net architecture may be used. The U-net architecture is described in O. Ronneberger, P. Fischer, and T. Brox, "U-net: Convolutional Networks for Biomedical Image Segmentation," in International Conference on Medical image computing and computer-assisted intervention. pages 234-241, Springer, 2015. Alternatively, a Diffusion Transformer (DiT) architecture may be used. Diffusion Transfomers (DiTs) are described in W. Peebles and S. Xie, "Scalable Diffusion Models with Transformers," arXiv:2212.09748v2, 2023.

After training, in a sampling procedure, new images may be generated from random noise using the optimized reverse process of the trained diffusion model. In order to transform noise into images, during the reverse process, at each timestep, $x_{t-1}$ samples may be drawn from a learned Gaussian distribution

$$N\left(x_{t-1}; \mu_\theta(x_t, t), \sum_\theta (x_t, t)\right),$$

where the mean of the distribution $\mu_\theta(x_t, t)$ is conditioned on the sample at the previous step and the variance of the distribution $\sum_\theta(x_t, t)$ follows a predefined schedule. The output of the reverse process may be a denoised image. Alternatively, the output of the reverse process may be a noise function. The noise function may be used to remove noise from the input image and thus create the denoised image.

In some cases, the computational resources needed to train and apply a diffusion model may be considerable and not always be readily available. This problem can be improved by applying an embedding algorithm, such as a variational autoencoder (VAE), and letting the diffusion model operate in latent space.

The term "latent space" as used herein is to be understood broadly in the present case and can also be referred to as "latent feature space" or "embedding space". Latent space is typically a representation, in particular an embedding, in which similar data points are closer together. Correspondingly the dimensionality of the latent space is usually chosen to be lower than the dimensionality of the feature space, e.g. pixel space of an image in spatial dimensionality, from which the data points are drawn. Hence, typically, the dimension is reduced which may correspond to a compression of the data. Accordingly, latent space can be seen as a smaller spatial representation of the data compared to the original feature space. The reduced complexity of latent space, i.e. the low dimensionality, can be advantageous to enable a more efficient image generation with a diffusion model. There are several embedding models that may perform a transformation of data into latent space. One possibility to transform data from a feature space into latent space is the application of a Variational Autoencoder (VAE). It has been found that particular good and efficient results can be achieved by applying a VAE before applying a diffusion model, such that the diffusion model operates in latent space with input data transformed into latent representations by the VAE.

The term "Variational Autoencoder" (VAE) as used herein is to be understood broadly in the present case. A VAE is a generative model and comprises an encoder and a decoder. Typically, both, the encoder and the decoder, are or comprise a neural network. The encoder maps input data into latent space. The decoder, on the other hand, has the function to map from the latent space to the feature space of the input data. Typically, encoder and decoder are trained together. However, they may also be trained separately. Training the VAE may be performed unsupervised, semi-supervised and supervised. When applied in combination with a Diffusion model, the VAE may be trained to encode images into a latent representation and decode from latent space prior to training the Diffusion model. Typically, during training, the encoder $E$ of the VAE maps an image $x$ into a latent representation $z = E(x)$ and the decoder $D$ reconstructs the image from this latent representation, resulting in $x' = D(x) = D(E(x))$. When combining the VAE with a Diffusion model, after training the VAE, the encoder network of the VAE may be frozen and the diffusion model may be trained using the latent representations $z = E(x)$ instead of the original images $x$.

The term "Diffusion Transformers" (DiTs) as used herein is to be understood broadly in the present case. DiT is a transformer-based DDPM. DiT utilizes the scalability of the Vision Transformer (ViT) as described in A. Dosovitskiy, L. Beyer, A. Kolesnikov, D. Weissenborn, X. Zhai, T. Unterthiner, M. Dehghani, M. Minderer, G. Heigold, S. Gelly, et al., "An image is worth 16×16 words: Transformers for image recognition at scale," arXiv preprint arXiv:2010.11929, 2020 on larger model sizes and feature resolutions. In the DiT architecture, the input spatial representation (e.g. z when operating in latent space, see above), such as 32×32×2 in latent space, may be converted into a sequence of tokens. Additional information for conditioning may be achieved by appending vector embeddings for timesteps t of the Diffusion model and corresponding condition labels c. The latent space tokens and conditional tokens may then be processed by multiple DiT blocks. It has been found that a DiT block that incorporates a conditioning via an adaptive layer norm zero (adaLN-Zero) as described in W. Peebles and S. Xie, "Scalable Diffusion Models with Transformers," arXiv:2212.09748v2, 2023 can work particularly well and reliable for the purpose of this disclosure. In this DiT block, standard layer norm layers in the transformer blocks are replaced with an adaptive layer norm. In this variant of DiT blocks, scale and shift parameters are regressed from the sum of the embedding vectors of timesteps and condition labels. Furthermore, dimension-wise scaling parameters are also regressed and applied prior to any residual connections within the DiT block. In this conditioning mechanism the same function is applied to all tokens. In the context of the present disclosure, the condition label contains regression condition information. The class condition information may be added directly to the embedded timesteps. For example, the class condition information label may be embedded to be between 0 and 1. With this embedding, the class condition information label does not need further encoding, i.e. there is no need for further converting into embeddings.

The term "labeled image" as used herein is to be understood broadly in the present case and generally denotes an image that corresponds to a label, such as above-mentioned label c. An image may in particular be labelled for training purposes, by providing a set of the image together with the label. The label may in particular be a regression value. Correspondingly, an unlabeled image may be an image that is not connected to a label. Hence, during training, images may be provided that are not combined with a label.

The term "Generative Adversarial Network" (GAN) as used herein is to be understood broadly in the present case and typically describes a machine learning algorithm that is adapted to perform image-to-image translations. A GAN is typically trained using paired images in order to learn to map features of an image (input image x) from one domain to another domain to obtain a target image y. In the context of this disclosure, the input image x may in particular be a segmentation mask, such as a leaf segmentation mask. The objective of the GAN is to learn a mapping function that converts. The GAN is composed of a generator (G) and a discriminator (D). The generator creates synthetic images from the input image, and the discriminator aims to differentiate the artificial images from real images. The objective function of a conditional GAN can be given as

$$\mathcal{L}_{cGAN}(G,D) = \mathbb{E}_{x,y}[\log D(x,y)] + \mathbb{E}_{x,y}\left[\log\left(1 - D\big(x, G(x,y)\big)\right)\right]$$

To encourage the generator to produce outputs close to the ground-truth, an mean absolute error can be incorporated that is defined as

$$\mathcal{L}_{L1}(G) = \mathbb{E}_{x,y,z}[\|y - G(x,z)\|_1]$$

The final objective of the GAN can be defined as

$$G = \arg\min_G \max_D L_{cGAN}(G,D) + \lambda L_{L1}(G),$$

where G tries to minimize the objective against the adversarial D that tries to maximize it. In the context of this disclosure, a further condition, such as a regression value may be incorporated into the architecture of the GAN. Further input conditions, such as the regression value may be additionally fed into the generator.

The term "agricultural product" as used herein is to be understood broadly in the present case and comprises any product/object/material which may be applied on an agricultural field. In the context of the present disclosure, the term agricultural product may comprise: chemical products such as fungicide, herbicide, insecticide, acaricide, molluscicide, nematicide, avicide, piscicide, rodenticide, repellant, bactericide, biocide, safener, plant growth regulator, urease inhibitor, nitrification inhibitor, denitrification inhibitor, or any combination thereof; biological products such as microorganisms useful as fungicide (biofungicide), herbicide (bioherbicide), insecticide (bioinsecticide), acaricide (bioacaricide), molluscicide (biomolluscicide), nematicide (bionematicide), avicide, piscicide, rodenticide, repellant, bactericide, biocide, safener, plant growth regulator, urease inhibitor, nitrification inhibitor, denitrification inhibitor, or any combination thereof; fertilizers and/or nutrients; seeds and seedlings; water.

The term "agricultural field" as used herein is to be understood broadly in the present case and presents any area, i.e. surface and subsurface, of a soil to be treated. The agricultural field may be any plant or crop cultivation area, such as a farming field, a greenhouse, or the like. The agricultural field may be identified through its geographical location or geo-referenced location data. A reference coordinate, a size and/or a shape may be used to further specify the agricultural field.

The term "application device" used herein is to be understood broadly in the present case and represents any device being configured to apply an agricultural product onto the soil of an agricultural field using respective application means. The application device may be configured to traverse the agricultural field. The application device may be a ground or an air vehicle, e.g. a rail vehicle, a robot, an aircraft, an unmanned aerial vehicle (UAV), a drone, or the like. The application device can be an autonomous or a non-autonomous application device. In this respect, the term "application means" used herein is to be understood broadly in the present case and comprises any means configured to be controlled by respective control data when applying the agricultural product on the agricultural field. In an example, the application device is a smart sprayer and the application means may be provided by a sprayer boom.

The term "providing" as used herein is to be understood broadly in the present case and represents any providing, receiving, querying, measuring, calculating, determining, transmitting of data, but is not limited thereto. Data may be provided by a user via a user interface, depicted/shown to a user by a display, and/or received from other devices, queried from other devices, measured other devices, calculated by other device, determined by other devices and/or transmitted by other devices.

The term "data" as used herein is to be understood broadly in the present case and represents any kind of data. Data may be single numbers/numerical values, a plurality of a numbers/numerical values, a plurality of a numbers/numerical values being arranged within a list, 2 dimensional maps or 3 dimensional maps, but are not limited thereto.

In the following particularly preferred embodiments are disclosed, which may be combined with the above-disclosed methods, systems, apparatuses, devices and/or use cases.

In an embodiment, the object may be a plant or part of a plant. The method is particularly well-suited to provide more training data for training an algorithm to detect a regression state of a plant or part of a plant. Preferably, the plant may be a cultivated plant and/or a crop plant. For example, the plant may be a winter wheat plant.

In an embodiment, the object may be a plant leaf. For example, the object may be a winter wheat leaf.

In an embodiment, the at least one regression state may comprise at least one of the following: a stage of a plant disease, a level of water of the plant, a plant age, a quality level of a plant, a plant vigour and/or a growing stage of a plant. Training data may thus be generated to train an algorithm to recognize such a regression state. This may in particular be useful, since often, there is not enough data of these types of regression states and/or not enough data of all regression states of a particular type.

In an embodiment, the regression value may correspond to the stage of a plant disease describing a stage of infection of a plant by referencing a percentage of damage. For example, the regression value may describe the stage of the plant disease on a scale from uninfected to completely infected. Often, for plant diseases, there is a scarcity of data for certain disease stages, e.g. due to a non-linear disease progression. By generating synthetic images with different degrees of disease damage, the scarcity of data can be efficiently addressed. For example, the plant disease may be based on a fungal infestation. One particular example of a plant disease is Yellow Rust disease (*Puccinia striiformis,* PUCCST).

In an embodiment, the at least one regression value may be a numeric value between 0 and 1. The regression value may be a numeric value between 0 and 1 can be particularly efficient to integrate as input for an algorithm. Furthermore, a such a numeric value may be particularly easy to correspond to a regression state. For example, a percentage of regression may be translated into such a numeric value (e.g., a range from 0% to 100% translated into a range from 0 to 1). For example, a 32% level of disease damage may be represented by the regression value of 0.32. For example, when using a diffusion model, using a label having numeric values between 0 and 1 may provide that no further encoding is needed.

In an embodiment, in addition to the at least one regression value, a segmentation mask describing an outline of the object may be received; wherein the trained algorithm may be applied on both, the at least one regression value and the segmentation mask, such that the object in the output image may have an outline according to the segmentation mask. The segmentation mask may be used to control the shape of the object. For example, the shape of a plant leaf may be controlled. On option can be to provide a set of data with identical shape but with different regression levels. Hence, a dataset having some object shapes with particular regression levels for each shape may be extended such that, for each shape different regression levels may be generated. Additionally, and/or alternatively, the location of a regression may be controlled via the segmentation mask. For example, a location of a disease, such as the location of a fungal infestation may be controlled. Optionally, a generated image of a segmentation of an object with the regression may be pasted into an image of the full object and/or of a larger part of the object. Hence, a local regression may be added into an object.

In an embodiment, the trained algorithm may comprise at least one diffusion model, wherein the diffusion model may be configured to receive the at least one regression value and use it as a conditional value in a denoising process of the diffusion model. It has been found that using a diffusion model can provide particularly realistic synthetic images with regression states that are about as difficult to recognize as regression states of real images. Hence, particularly useful synthetic images may be generated for training an algorithm to recognize a regression state.

In an embodiment, the diffusion model may be applied in latent space, wherein the trained algorithm may comprise a decoder algorithm that transforms the output of the diffusion model from latent space into an image in pixel space. The decoder algorithm may, for example, be based on a Variational Autoencoder (VAE). The VAE may in particular be a trained VAE.

Operating the diffusion model in latent space may reduce the computational power that is required while still providing reliable results.

In an embodiment, the diffusion model may be a transformer-based diffusion model comprising Diffusion Transformer blocks (DiT). It has been found that a diffusion model with DiTs can provide particularly accurate results.

In an embodiment, a spatial representation of noise in latent space may be concatenated with the segmentation mask before the denoising process is applied. The segmentation mask may be generated by a segmenting algorithm as known in the state of the art. After applying the segmenting algorithm, the segmentation mask may be transferred into latent space, e.g. by the decoder algorithm or by a further decoder algorithm.

In an embodiment, a spatial representation of noise in latent space, optionally concatenated with the segmentation mask, may be converted into a sequence of tokens before the denoising process is applied. A sequence of tokens is particularly well-suited as input for a DiT block.

In an embodiment, the trained algorithm may be trained to process both unlabeled and labeled images, wherein labeled images may be images that are connected to at least one regression value and unlabeled images may be not connected to a regression value during training. The labeled images may be also referred to as annotated images. The unlabeled images may also be referred to as unannotated images. This embodiment may be incorporated as semi-supervised option. Hence, the algorithm may have been trained with labeled and unlabeled images at the same time. The generation of synthetic images may be improved via this method. It has been found that the distinguishing features of the images can be captured more efficiently than via training with labelled images only. From the unlabeled data, the algorithm may learn the most representative features of the object, e.g. of plant leaves, while from the labeled data the algorithm may learn to distinguish between the different degrees of diseases. Furthermore, the training process can be more efficient with this approach.

In an embodiment, at least a first regression value describing a first regression state and a second regression value describing a second regression state may be received, wherein the first regression value may describe a different form (i.e., type) of regression than the second regression value; wherein the trained algorithm may be applied on at least the first and the second regression value; wherein the output of the trained algorithm may be an image of the object in the first and in the second regression state. For example, an object may have one or several of different diseases. The algorithm may be trained to generate images that have different stages and different types of regressions. For example, the algorithm may be trained to accommodate multiple diseases, allowing the generation of synthetic images representing different diseases and in different states disease. If the input data is a labeled image, the network may take the label information into account. If the input data is an unlabeled image, the network may disregard the label information.

In an embodiment, the regression values may be in the form of a vector, a regression value corresponding to an element of the vector. The elements of the vector may also be referred to as components of the vector. Hence, the regression level of the different types of regressions may be defined by an input label being a conditioning vector. The components, i.e. elements, of the vector may specify a regression level of a different type of regression, respectively. Hence, one vector component per type of regression may be provided. One component may be provided representing a non-regression of the object, e.g. healthy plant. For example, the vector may have the form [regression type 1, regression type 2, ..., non-regression], such as [disease 1, disease 2, ..., healthy]. For example, considering a plant or plant leaf having 30% of PUCCST and 20% of another disease (PUCCRT) the network may receive the input label [0.3,0.2,0.5], 0.3 referring to PUCCST, 0.2 to PUCCRT and the remaining 0.5 to HEALTHY. The label data may be embedded through an embedding network. For example, convolutional layers may be used. The embeddings may be calculated by a module comprising a Dense-GELU-Dense architecture. However, another type of mathematical projection may also be used for the calculation of the embeddings. For example, an embedding may be provided with the regression level, e.g. a disease percentage, of all types of regression, e.g. all classes of disease. It may be provided that, when the input is a labeled image, the label sum, in particular the sum of the components of the label and/or of the label vector, will be 1. The unlabeled data may be defined by providing a label being a vector having all zeros.

In an embodiment, the trained algorithm may be trained according to the method for training an algorithm to generate a synthetic image as described herein.

In an embodiment, the majority of the training data may be used for the training process and a minority of the training data is partly used for validating and partly used for testing the algorithm after training. More than 60%, preferably more than 70%, may be used for training. Less than 40%, preferably less than 30%, may be used for validating and testing. For example, 80% of the training data may be used for the training process and 10% of the training data may be used for each validating and testing, respectively.

In an embodiment, the object may be a plant or a part of a plant. For example, the object may be a leaf of a plant.

In an embodiment, the at least one regression state may comprise at least one of the following: a stage of a plant disease, a level of water, a plant age, a quality level, a plant vigour, a growing stage of a plant.

In an embodiment, the algorithm may be trained both, with unlabeled and labeled images, by providing at least one additional training set being marked as having an undefined regression. The labeled images may be also referred to as annotated images. The unlabeled images may also be referred to as unannotated images. This embodiment may be incorporated as semi-supervised option. Hence, the algorithm may be trained with labeled and unlabeled images at the same time. The generation of synthetic images may be improved via this method. It has been found that the distinguishing features of the images can be captured more efficiently than via training with labelled images only. From the unlabeled data, the algorithm may learn the most representative features of the object, e.g. of plant leaves, while from the labeled data the algorithm may learn to distinguish between the different degrees of diseases. The need for annotated, i.e. labeled, data can thus be reduced. The computation time may also be reduced with this approach. This approach may be combined with training different types (i.e., forms) of regression at the same time. Hence, a multi-class approach may be included. For example, an object may have one or several of different diseases. The algorithm may be trained to generate images that have different stages of different types of regressions. The regression level of the different types of regressions may be defined by an input label being a vector. The components of the vector may specify a regression level of a different type of regression, respectively. One of the vector elements components may be a check value that depends on the regression level of the different types of regression. The label data may be embedded through an embedding network. For example, convolutional layers may be used. The embeddings may be calculated by a module comprising a Dense-GELU-Dense architecture. However, another type of mathematical projection may also be used for the calculation of the embeddings. For example, an embedding may be provided with the regression level, e.g. a disease percentage, of all types of regression, e.g. all classes of disease. It may be provided that, when the input is a labelled image, the label sum, in particular the sum of the components of the label and/or of the label vector, will be 1. The unlabeled data may be defined by providing a label being a vector having all zeros. If the input data is a labeled image, the network may take the label information into account. If the input data is an unlabeled image, the network may disregard the label information.

In an embodiment, the algorithm may comprise a diffusion model, the diffusion model comprising a diffusion process and a denoising process; wherein the training comprises:

the diffusion model applying noise to a representation of the reference image in a plurality of steps in the diffusion process; and
the diffusion model learning to denoise the noised representation of the reference image in the denoising process, wherein the at least one regression value is an input parameter in the denoising process.

In an embodiment, the diffusion process may be formulated as a Markov chain.
In an embodiment, the diffusion process may involve transforming the representation of the reference image into a Gaussian distribution.
In an embodiment, the algorithm may further comprise a variational autoencoder;

wherein, prior to training of the diffusion model, the variational autoencoder is trained to transform reference images into a latent representation of the reference images in latent space and transform a latent representation of images into images in pixel space;
wherein, after training the variational autoencoder, the trained variational autoencoder is used to provide latent representations of the reference images in latent space;
wherein the diffusion model is trained in latent space using the latent representations of the reference images.

In an embodiment, the training sets may further comprise a segmentation mask describing an outline of the object, respectively.
In an embodiment, the segmentation mask may be a further input parameter for the denoising process.
In an embodiment, the training data further may comprise unlabeled training sets, wherein the unlabeled training sets comprising a reference image; wherein, prior to training the algorithm with the regression training sets, the algorithm may be pre-trained with the unlabeled training sets without an input of a regression level to generate output images of objects. Hence, the method may comprise training an unconditioned algorithm, e.g. comprising a diffusion model or GAN, with the unlabeled training data and then finetune this algorithm with a few labeled images. The learned network weights from the prior training with unlabeled training sets may be used to train a second algorithm using annotated data, i.e. the training sets comprising real images and regression values. This embodiment allows the second algorithm to build on the knowledge learned by the initial model, typically resulting in better performance. Since, in the first training phase, no labels, i.e. no regression values, are available, the training is focused on capturing the inherent features of the images without considering the regression values. Subsequently, during a further training phase, the algorithm or another algorithm, e.g. another network, is trained using the weights obtained from the previous algorithm. This time, labeled data is introduced into the training process. The network has already learned how to generate synthetic images of corresponding objects, and its objective now shifts to discerning and distinguishing among different regression stages. For example, the algorithm may first be trained to generate plant images and then, in the next training step, to generate plants with different stages of disease. Fewer labeled data may be required and the time and/or computational effort can be reduced. Furthermore, the results are usually more reliable. Experiments have shown that model performance is increased with this embodiment. Analogous to the embodiment, where the algorithm is trained simultaneously with labeled and unlabeled real images, the training comprising subsequent training with unlabeled and then labeled training sets may also be combined with training multiple types of regression.
In an embodiment, the regression training sets may comprise a plurality of regression level values describing different forms of regression, respectively; wherein the algorithm is trained to generate output images of objects in a plurality of different forms of regression states corresponding to the different input regression values. Hence, the algorithm may be trained to generate images that have different stages and different types of regressions. This may be performed as described above. The regression values may be provided in the form of a vector as described herein.
The embodiments described herein may be combined unless specifically noted otherwise. Features and advantages described with respect to one aspect of the disclosure may be applied to other aspects of the disclosure.

## BRIEF DESCRIPTION OF THE DRAWINGS

In the following, the present disclosure is further described with reference to the enclosed figures:

**Figure 1** illustrate a flow diagram of a computer-implemented method for training an algorithm to generate a synthetic image of an object according to an embodiment of the present disclosure;

**Figure 2** illustrate a flow diagram of a computer-implemented method for generating a synthetic image of an object having at least one regression state according to an embodiment of the present disclosure;

**Figure 3**      illustrate a system for generating a synthetic image of an object;

**Figure 4**      illustrates a distribution of a dataset of images of winter wheat leaves in different stages of Yellow Rust disease;

**Figure 5**      shows sample images of winter wheat leaves together with images of corresponding segmentation masks;

**Figure 6**      illustrate the working principle of an example embodiment of an algorithm used in the computer-implemented method for generating a synthetic image of an object;

**Figure 7**      illustrates the working principle of an example embodiment of an algorithm used in the computer-implemented method for generating a synthetic image of an object;

**Figure 8**      illustrates the working principle of an example embodiment of an algorithm used in the computer-implemented method for generating a synthetic image of an object;

**Figure 9**      illustrates an example embodiment of a network architecture with Diffusion transformer blocks;

**Figure 10**     shows examples of test results based on method tests with embodiments according to Figures 6 to 8;

**Figure 11**     illustrates experts' answers regarding their ability to differentiate between synthetic and real images;

**Figure 12**     illustrates a flow diagram of a computer-implemented method for training an algorithm to generate a synthetic image of an object according to an embodiment of the present disclosure;

**Figure 13**     illustrates an example embodiment of a network architecture with Diffusion transformer blocks according to an embodiment of the present disclosure;

**Figure 14**     illustrates an example embodiment of a network architecture with Diffusion transformer blocks according to an embodiment of the present disclosure;

**Figure 15**     illustrates an example embodiment of a centralized computing syst;

**Figure 16**     illustrates an example embodiment of a decentralized computing environment;

**Figure 17**     illustrates an example embodiment of a distributed computing environment; and

**Figure 18**     illustrates exemplarily different possibilities to receive and process field data.

## DETAILED DESCRIPTION OF AN EMBODIMENT

The following embodiments are mere examples for implementing the method, the system, the apparatus, or application device disclosed herein and shall not be considered limiting.

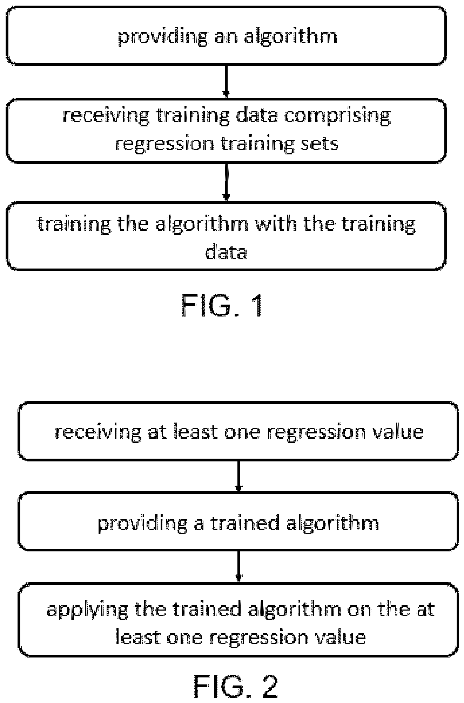

**Figure 1** illustrates a flow diagram of a computer-implemented method for training an algorithm to generate a synthetic image of an object having at least one regression state according to an embodiment of the present disclosure. For example, the object may be a plant or a part of a plant, such as a plant leave. The at least one regression state may, for example, be a stage of a plant disease, a level of water, a plant age, a quality level, a plant vigour, and/or a growing stage of the plant. For the method, an algorithm is provided. The algorithm may, for example, comprise a diffusion model and/or a Variational Autoencoder. However, other algorithms, such as based on a Generative Adversarial Network are generally also feasible. In a further step, training data are received. The training data comprise regression training sets, and the regression training sets each comprise a reference image and at least one regression value. The reference images of the sets depict objects in different regression states and the regression values describe the regression states. Optionally, the training sets may further comprise a segmentation mask describing an outline of the object. In a further step, the algorithm is trained with the training data to generate output images of objects in a regression state corresponding to at least one input regression value. Preferably, the majority of the training data is used for the training process and a minority of the training data is partly used for validating and partly used for testing the algorithm after training.

**Figure 2** illustrates a flow diagram of a computer-implemented method for generating a synthetic image of an object having at least one regression state according to an embodiment of the present disclosure. The object may, for example, be a plant or part of a plant, such as a plant leaf. The at least one regression state may, for example, be a stage of a plant disease, a level of water of the plant, a plant age, a quality level of a plant, a plant vigour and/or a growing stage of the plant. The method comprises a step of receiving at least one regression value, wherein the at least one regression value describes the at least one regression state of the object. Optionally, the at least one regression value may be a numeric value between 0 and 1. Such a numeric value may be particularly efficient to integrate as input for an algorithm. Optionally, in addition to the at least one regression value, a segmentation mask describing an outline of the object may be received. In a further step, a trained algorithm is provided. The trained algorithm is configured to provide an output image of an object in at least one regression state based on at least one regression value. The trained algorithm may comprise at least one diffusion model. However, other trained algorithms, such as Generative Adversarial Network, may be used alternatively. In a further step, the trained algorithm is applied on the at least one regression value and the output of the trained algorithm is an output image of the object in the at least one regression state. Optionally, if a segmentation mask is received, the trained algorithm may be applied on both, the at least one regression value and the segmentation mask, such that the object in the output image has an outline according to the segmentation mask.

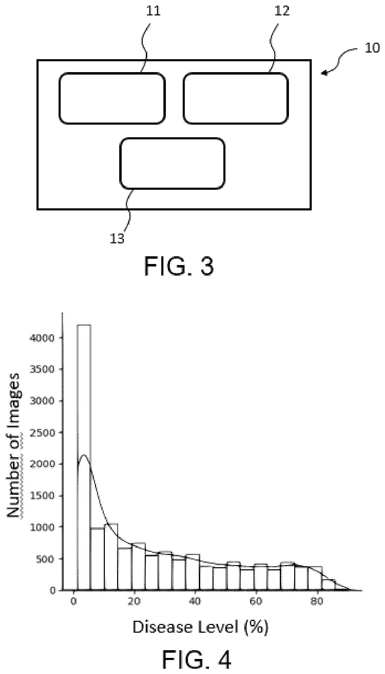

**Figure 3** illustrates a system 10 for generating a synthetic image of an object, such as an image of a plant or part of a plant, having at least one regression state. The system comprises a processing circuitry 11, a storage medium 12 and a data interface 13. The storage medium 12 comprises a computer program that comprises instructions which when the program is executed, cause the processing circuitry 11 to carry out the method as described in **Figure 2.** The data interface 13 is configured to receive input for the trained algorithm including the at least one regression value.

**Figure 4** illustrates a distribution of a dataset of images of winter wheat leaves in different stages of Yellow Rust disease (*Puccinia striiformis,* PUCCST), including images of healthy leaves. The dataset was acquired from different farmlands in Germany and Spain and comprises a total of 17,306 images, covering various stages of Yellow Rust disease. The dataset of images was annotated by expert technicians. In particular, a stage of disease was assigned for each image. The stages of disease are quantified as a percentage of damage, ranging from 0% for healthy to 100% and can be defined to be a regression state of the corresponding plant. As can be seen in the plot, the dataset is unbalanced in that more samples in the early stages of the disease are available. This is due to the rather uncontrollable and non-progressive evolution of the disease, leading to more samples in the early stages of the disease. In particular, there is a scarcity of images depicting the later stages of the disease. Generally, for training an algorithm it would be desirable to have a larger number of images, in particular a larger number of images in the late stages of the disease. Therefore, the dataset was used to train an algorithm to generate synthetic images of corn leaves at different stages of disease with a method according to an embodiment of the present disclosure.

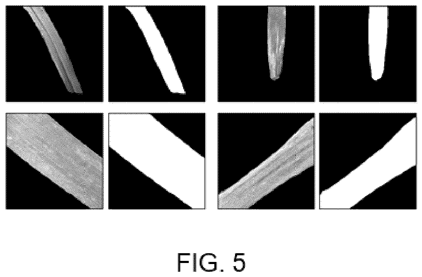

**Figure 5** shows sample images of winter wheat leaves together with images of corresponding segmentation masks. The images were generally resized to a 256×256-pixel resolution. These sample images are part of the dataset of images that are distributed as shown in **Figure 4.** For the sample images, the background was removed. This was done by using a leaf segmentation algorithm. For this purpose, any cropping or segmentation method may be used. In this particular case, the algorithm as described in A. Picon, A. Alvarez-Gila, M. Seitz, A. Ortiz-Barredo, J. Echazarra, and A. Johannes, "Deep convolutional neural networks for mobile capture device-based crop disease classification in the wild," Computers and Electronics in Agriculture, vol. 161, pp. 280-290, 2019, was applied. The obtained leaf segmentation masks were further used as segmentation masks for training and testing different algorithms.

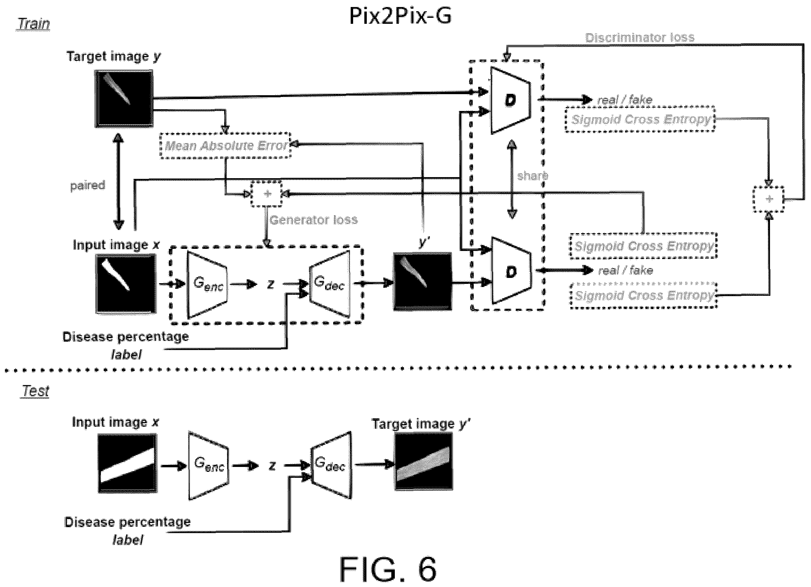

**Figure 6** illustrates the working principle of an example embodiment of an algorithm used in the computer-implemented method for generating a synthetic image of an object having at least one regression state. For reference, the algorithm according to this embodiment is named Pix2Pix-G. Pix2Pix-G is shown during both, the training phase and during the application or testing phase of the algorithm, in which synthetic images can be generated. Pix2Pix-G is based on the concept of a Generative Adversarial Network (GAN) that is adapted to perform image-to-image translations. The Pix2Pix-G is trained using paired images in order to learn to map features of an image from one domain (input image x) to another domain (target image y). As can be seen in the diagram, the input image x is a segmentation mask, in particular a leaf segmentation mask. The leaf segmentation mask is input as a binary image, i.e., in this representation, the area of the leaf is depicted white and the area around the leave is depicted black. Alternatively, any other distinction between the leaf area and the area around the leaf may be chosen. The target image y is a real leaf image. Hence, in this embodiment, the objective of the GAN is to learn a mapping function that converts leaf segmentation masks into realistic images of the plants leaves. The GAN is composed of a generator (G) and a discriminator (D). The generator creates artificial images, i.e. synthetic images, of plant leaves from their corresponding segmentation masks, and the discriminator aims to differentiate the artificial images from real images. In this embodiment there are two conditions that are fed into the generator. The first condition is the aforementioned segmentation mask. The second condition is a regression value, namely a disease percentage label, defining a level of disease the plant on the target image has. The GAN has been tested for when the second condition indicates the percentage of yellow rust (PUCCST) damage of the corresponding leave. The second condition is fed into the generator network. Accordingly, the attributes of the output image of the generator are conditioned by two factors: the leaf segmentation mask and the regression value representing the percentage of damage to be included in the generated image.

For example, the generator may be configured according to be a modified U-Net framework. First, it has an encoder in which the input image is downsampled to a bottleneck layer. Then, the label, i.e. the regression value defining the disease percentage information, is concatenated to the encoded representation of the input image, and up-sampling layers are applied to obtain the target image. Preferably, skip connections may be added between the upsampling and downsampling layers. The generator loss is a combination of the L1 loss between the target image and the generated image as well as the sigmoid cross-entropy loss between he generated images and a matrix of ones, representing real values.

For example, the discriminator may be a convolutional PatchGAN classifier that compares the input and target images, and classifies each patch in the image as real or fake. The discriminator loss can be a combination of a real loss calculated as sigmoid cross-entropy loss between real images and a matrix of ones plus a generated loss as a sigmoid cross-entropy loss between generated images and a matrix of zeros.

After training, the generator G can be used to generate new synthetic images (target image y') based on an input of leaf segmentation masks (input image x) and a disease percentage (disease percentage label).

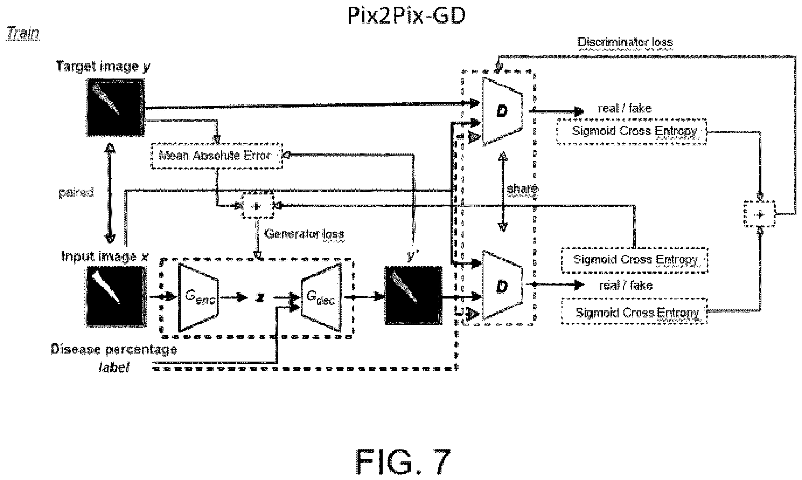

**Figure 7** illustrates the working principle of an example embodiment of an algorithm used in the computer-implemented method for generating a synthetic image of an object having at least one regression state. For reference, the algorithm according to this embodiment is named Pix2Pix-GD. Pix2Pix-GD is an extension of Pix2Pix-G that is shown in **Figure 6.** Pix2Pix-GD is shown during the training phase. The application or test phase of Pix2Pix-GD can be exactly like the application or test phase of Pix2Pix-G. Like Pix2Pix-G, Pix2Pix-GD is based on the concept of a Generative Adversarial Network (GAN) that is adapted to perform image-to-image translations. Pix2Pix-GD differs from Pix2Pix-G, in that the regression value, i.e. the disease information, is also input into the discriminator during training. Thus, in Pix2Pix-GD, the discriminator network uses the disease information label in combination with the input (real and synthetic) images to make the prediction whether images are real. The losses of both generator and discriminator may be the same in both, Pix2Pix-GD and Pix2Pix-G. For the testing and comparison of the networks the, unmodified, i.e. identical, losses have been used.

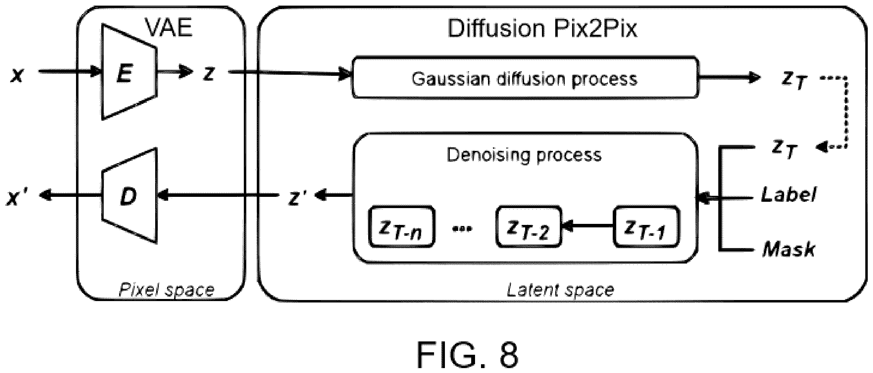

**Figure 8** illustrates the working principle of an example embodiment of an algorithm used in the computer-implemented method for generating a synthetic image of an object having at least one regression state. In this embodiment, the algorithm comprises a variational autoencoder (VAE) and a diffusion model. For reference, the diffusion model is named DiffusionPix2Pix. In a first phase, the variational autoencoder, with a learned encoder E, is trained to compress images into a smaller spatial representation. Specifically, given an image $x$, the encoder $E$ maps $x$ to a latent representation $z = E(x)$, and the decoder $D$ reconstructs the image from this latent representation, resulting in $x' = D(x) = D(E(x))$. In a second phase, the encoder network of the VAE is frozen and the diffusion model DiffusionPix2Pix is trained using the latent representations $z = E(x)$ instead of the original images $x$. Hence, the DiffusionPix2Pix operates in latent space. In a forward process (in this embodiment, a Gaussian diffusion process) of DiffusionPix2Pix, the latent representation $z$ of the original image is progressively noised by adding noise at multiple timesteps on a Markov chain. The output of this forward process is a Gaussian distribution $z_T$ that is completely noisy. Following the forward process, in a reverse process, i.e. a denoising process, of DiffusionPix2Pix moving in the opposite direction on the Markov chain, a denoising network of the diffusion model is trained to gradually remove the noise in order to obtain a denoised image $z'$ corresponding to the reference image. In addition to the noised representation $z_T$, a regression value, i.e. a conditional label, and a segmentation mask is used as input for the reverse process. The denoising network is trained to remove the noise iteratively between consecutive timesteps, $z_T$, $z_{T-1}$, $z_{T-2}$, $z_{T-n}$, of the Markov chain, thereby reversing the application of noise. During the training, these reverse operations are approximated by adapting trainable parameters of the denoising network.

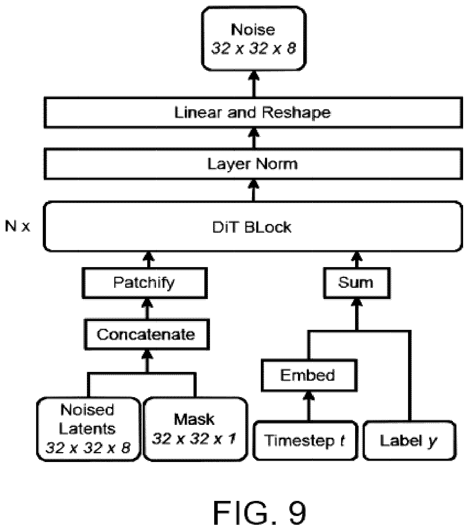

After training, new images can be generated by sampling a representation $z_T$ from the diffusion model and subsequently decoding it to an image using the trained decoder $x' = D(x)$ from the previously trained VAE network. In this particular embodiment, the diffusion model is based on a Diffusion Transformer architecture. This architecture is illustrated in **Figure 9.**

**Figure 9** illustrates an example embodiment of a network architecture with Diffusion transformer (DiT) blocks. In particular this architecture may be applied to the DiffusionPix2Pix that is illustrated in **Figure 8.** A regression value, referred to as Label y in figure 9, is directly appended to timestep embeddings that define the timesteps t and used as conditional value. When testing and comparing this algorithm the regression values were percentage values of plant disease. Optionally, a binary mask, such as a segmentation mask, may be introduced as additional condition, such that an image-to-image translation from the mask to a synthetic image may be facilitated. For testing this algorithm, the binary mask was a leaf segmentation mask. By incorporating this mask, the generation of synthetic images based on predefined segmentation patterns is enabled. The segmentation mask may be generated from real images and consecutively resized to match the dimensions of the input latent representation z, i.e. the "Noised Latents". In this embodiment, the segmentation mask is concatenated with the latent representation. Hence, the image in latent space with dimensions $M \times N \times 8$ (e.g., $32 \times 32 \times 8$)

is concatenated to the mask with dimensions M×N×1 (e.g., 32×32×1), resulting in the end in an input of M×N×9 (e.g., 32×32×9). In a patchify layer, the latent representation that is concatenated with the latent representation is converted into a sequence of tokens. Due to the integration of the segmentation mask into the DiffusionPix2Pix architecture, the image generation process can be controlled effectively, in particular such, that the outline of the synthetic images can be controlled. The approach of using this architecture for DiffusionPix2Pix may allow a simple and efficient integration of the segmentation mask as conditional value. The resulting model can produce good results while, at the same time, avoiding overly complex network structures.

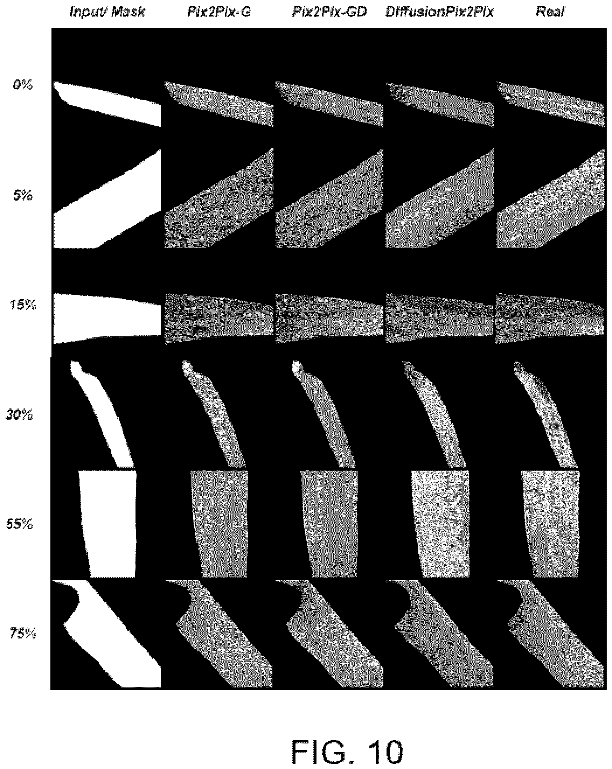

The different models illustrated in **Figure 6 and 7,** as well as **Figures 8 and 9** have been tested with the data shown in **Figures 4 and 5,** i.e. with winter wheat leaves having various stages of Yellow Rust Disease (PUCCST). Examples of the results are shown in **Figure 10.** On the left, i.e. on the vertical axis, the (input) regression values, being a PUCCST disease level, are shown. On the left row, the input leaf segmentation masks are shown. The regression value and the leaf segmentation masks were the input, i.e. conditions, used to generate the synthetic images with the different models. The second, third, and fourth column shows the images generated by Pix2Pix-G, Pix2Pix-GD, and Diffusion Pix2Pix, respectively. The fifth (last) column shows corresponding real images of winter what leaves at corresponding different stages of PUCCST. Both, the real images and the synthetic images created via the models according to the present disclosure, have the same disease levels and leaf segmentation masks. It can be observed that the Diffusion-Pix2Pix model visually produces particularly realistic images compared to the other (GAN-based) models, as the synthetic images generated by DiffusionPix2Pix are more similar to the real images than the ones generated by the other methods.

In order to assess the quality of the generated synthetic images a Fréchet Inception Distance (FID) has been used in order to measure the agreement between real and synthetic images. FID is a standard metric for evaluating the quality of generative models. It is introduced in M. Heusel, H. Ramsauer, T. Unterthiner, B. Nessler, and S. Hochreiter, "Gans trained by a two time-scale update rule converge to a local nash equilibrium," Advances in neural information processing systems, vol. 30, 2017. FID calculates the between the real and the generated images in feature vector space using feature representations extracted from the deepest layer of the Inception-v3 deep learning model. A lower FID, i.e. a smaller distance, indicates higher image quality, indicating that the synthetic images are more similar to the real images. Additionally, image fidelity and image diversity of the generated images have been evaluated. The Image fidelity indicates whether the synthetic image resembles a specific object. The image diversity evaluates the variety and uniqueness of the generated images. To quantify image fidelity, a Precision is computed which represents the overlap between synthetic and real features relative to the entire set of synthetic features. Image diversity is measured by computing a Recall, which indicates the overlap relative to the entire set of real features. Values of Precision and Recall closer to 1 indicate higher similarity and diversity of the generated synthetic images. The concept of Precision and Recall is known in the state of the art. A detailed description of this concept can be found in T. Kynkäänniemi, T. Karras, S. Laine, J. Lehtinen, and T. Aila, "Improved precision and recall metric for assessing generative models," Advances in Neural Information Processing Systems, vol. 32, 2019. The results of the tested models analyzed with FID as well as Precision and Recall are shown in Table 1. As can bee seen, DiffusionPix2Pix obtained both the lowest, i.e. best, FID and a Precision and Recall being closest to 1. DiffusionPix2Pix having the lowest FID value indicates the highest similarity of synthetic images generated by DiffusionPix2Pix to real images. Moreover, DiffusionPix2Pix generated images with higher fidelity, i.e. higher Precision, and greater diversity, i.e. higher Recall, than the other models. Hence, DiffusionPix2Pix provided the best results in all of these three metrics.

*Table I*

| Model | FID | Precision | Recall |
|---|---|---|---|
| **Pix2Pix-G** | 57.379 | 0.458 | 0.313 |
| **Pix2Pix-GD** | 54.346 | 0.479 | 0.311 |
| **DiffusionPix2Pix** | 31.613 | 0.812 | 0.577 |

Additionally, a t-SNE technique has been applied. This technique is also known in the state of the art and described in L. Van der Maaten and G. Hinton, "Visualizing data using 1093 t-sne.," Journal of machine learning research, vol. 9, no. 11, 1094 2008. The t-SNE technique obtains the representation of the calculated feature vectors in a two-dimensional graph. The t-SNE technique showed the greatest overlap between the real and synthetic images generated by DiffusionPix2Pix compared to the other two models, indicating a particularly strong alignment between generated and real images throughout the feature space with DiffusionPix2Pix. DiffusionPix2Pix turned out to be particularly good with images having a higher level of disease by producing a particularly great overlap in this area. Hence, particularly good results can be obtained for the disease levels, of which typically fewer real data exist (cf. **Figure 4).**

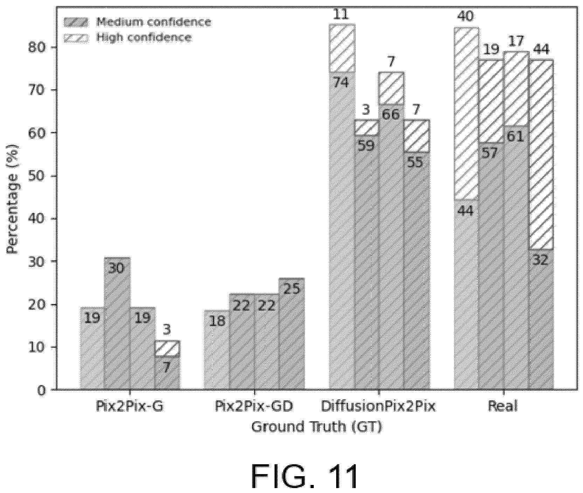

Furthermore, results were evaluated by experts. The experts were presented a web-form that consisted of 132 images, including a mix of mix of real and synthetic images generated using the three exemplary models according to the present disclosure. The images for the web form were selected randomly. The web form was conducted by four experts in the field. The experts were asked to differentiate between real and synthetic images, provide their opinion along with their level of confidence, and indicate the percentage of damage observed in each leaf image. **Figure 11** illustrates the experts' answers regarding their ability to differentiate between synthetic and real images. The ground truth of the images (whether they were real or generated) is indicated. Hence, for each model (Pix2Pix-G, Pix2Pix-GD, DiffusionPix2Pix) and the real images (Real) there are four columns, one for each expert. **Figure 11** presents the percentage of images selected as real by each expert. The result is divided into high and medium confidence levels. The filled part of each box represents the percentage of images assessed as real with medium confidence level, while the unfilled part above corresponds to the percentage of images evaluated as real with high confidence level. The sum of both confidence options provides the total percentage of images assessed as real for each expert. Table II shows the mean and variance, as a result of combining the answers of all the experts per method. As can be seen, among the models, the highest percentage of images was perceived as real (with high confidence) in the case of synthetic images generated by DiffusionPix2Pix. The percentages are close to the percentages obtained for real images and even overlap within their respective variance.

*Table II*

| Ground-Truth | Percentage of images evaluated as Real |
|---|---|
| **Pix2Pix-G** | $20.10 \pm 6.87$ |
| **Pix2Pix-GD** | $22.22 \pm 2.62$ |
| **DiffusionPix2Pix** | $71.30 \pm 9.22$ |
| **Real** | $78.57 \pm 4.21$ |

The experts were also tested to predict the level of yellow rust disease (PUCCST) present in each image. The disease level detection can be seen as a regression problem, and the results were evaluated using $R^2$ and Mean Squared Error (MSE) metrics. $R^2$ measures how close the data are to the fitted regression line, with a desirable value of 1.0. MSE measures the dispersion of data points around the regression line, with a smaller MSE indicating a better fit. Table III presents the average $R^2$ and MSE results for each tested method, combining the results of the different experts. As can be seen, the disease level of images generated by Pix2Pix-G was easiest to determine by the experts (high $R^2$ and low MSE). On the other hand, the detection of disease level of DiffusionPix2Pix comes closest to the detection with real images (nearly the same $R^2$ and very similar MSE). This corresponds to the greater overall similarity of DiffusionPix2Pix-generated images with real images (see tables I and II).

*Table III*

| Ground Truth | $R^2$ | MSE |
|---|---|---|
| **Pix2Pix-G** | $0.83 \pm 0.04$ | $0.013 \pm 0.003$ |
| **Pix2Pix-GD** | $0.654 \pm 0.027$ | $0.034 \pm 0.003$ |
| **DiffusionPix2Pix** | $0.752 \pm 0.037$ | $0.022 \pm 0.004$ |
| **Real** | $0.750 \pm 0.006$ | $0.027 \pm 0.001$ |

Overall, it has been found, that with all three variants, synthetic images with a specific regression value can be generated. Among the tested models, DiffusionPix2Pix consistently provides the best results, both via evaluation metrics (FID, Precision and Recall) as well as via expert evaluation. The tests demonstrate, that the models, most notably the DiffusionPix2Pix model, effectively capture the characteristics of real images. In particular the DiffusionPix2Pix model results in high-quality synthetic images that exhibit notable fidelity and diversity. Expert evaluation further confirms the realistic appearance of the synthetic images, with the achieved damage grading agreement being similar to that of real images ($R^2 = 0.752$ versus $R^2 = 0.75$).

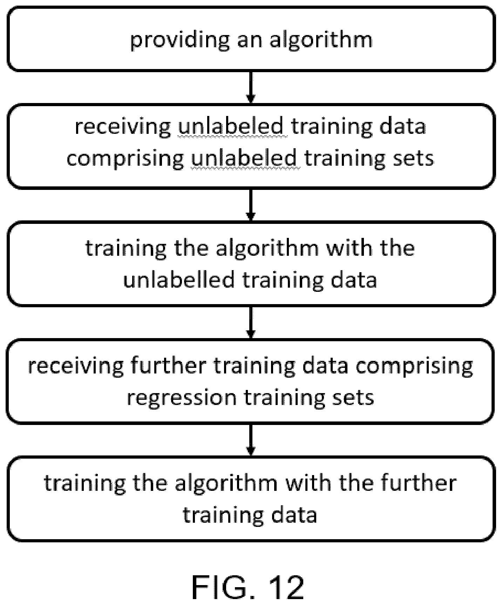

**Figure 12** illustrates a flow diagram of a computer-implemented method for training an algorithm to generate a synthetic image of an object having at least one regression state according to an embodiment of the present disclosure. For the method, an algorithm is provided. In a further step, training data are received. The training data comprise regression training sets and unlabeled training sets. The regression training sets each comprise a reference image and at least one regression value. The reference images of the sets depict objects in different regression states and the regression values describe the regression states. The unlabeled training sets comprise a reference image. The reference images of the unlabeled training sets may also comprise objects in different regression states. Additionally, or alternatively, the reference images of the unlabeled training sets may comprise objects without regression states. The unlabeled training sets and the regression training sets may be received at the same time or at different points in time. For example, the regression training sets may be received later as further training data. Optionally, the training sets, in particular both, the unlabeled training sets and the regression training sets, may further comprise a segmentation mask describing an outline of the object. In a further step, the algorithm is trained with the unlabeled training data to generate output images of objects that are not specified to have a specific regression state. Hence, prior to training the algorithm with the regression training sets, the algorithm is pre-trained with the unlabeled training sets without an input of a regression level to generate output images of objects. Consecutively, the algorithm is trained with the further training data comprising the regression training sets to generate output images of objects in a regression state corresponding to at least one input regression value. Apart from the described differences, the method as described with respect to **Figure 12** may have analogous features and advantages as the method described with respect to **Figure 1.**

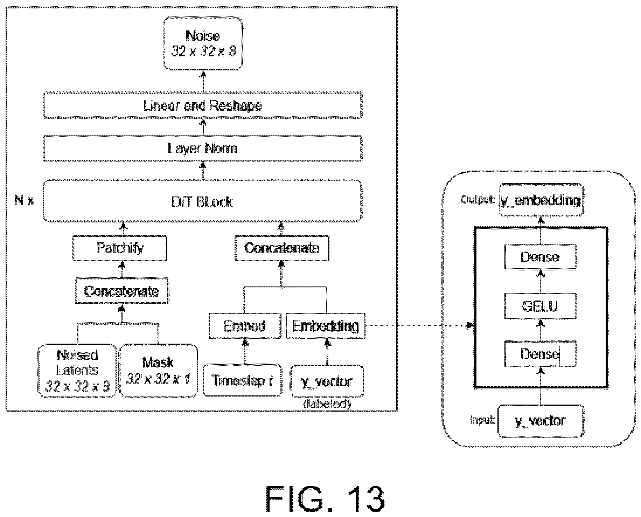

**Figure 13** illustrates an example embodiment of a network architecture with Diffusion transformer (DiT) blocks according to an embodiment of the present disclosure, wherein the illustration/diagram on the right side is a detail of the embedding block. The architecture may correspond to the one shown in **Figure 9,** with the difference being that the conditional label y is a vector. The regression values are in the form of the y-vector, a regression value corresponding to an element of the vector. Thus, instead of a single conditional value, i.e. a single number, a conditioning vector is included. Hence the algorithm may be trained to generate objects having different types of regression. Accordingly, the regression training sets comprise a plurality of regression level values describing different forms of regression, respectively. The algorithm is trained to generate output images of objects in a plurality of different forms of regression states corresponding to the different input regression values. For the implementation of the vector label y, this embodiment comprises an additional module that works as an embedding extractor for embedding the vector. The module comprises two dense layers and one GELU (Gaussian Error Linear Unit Code) activation function. Optionally, any other type of mathematical projection may be used instead of the shown module. For example, if the objects are plants or parts of plants, the training method may be able to accommodate multiple diseases, allowing the generation of synthetic images representing different diseases and in different states.

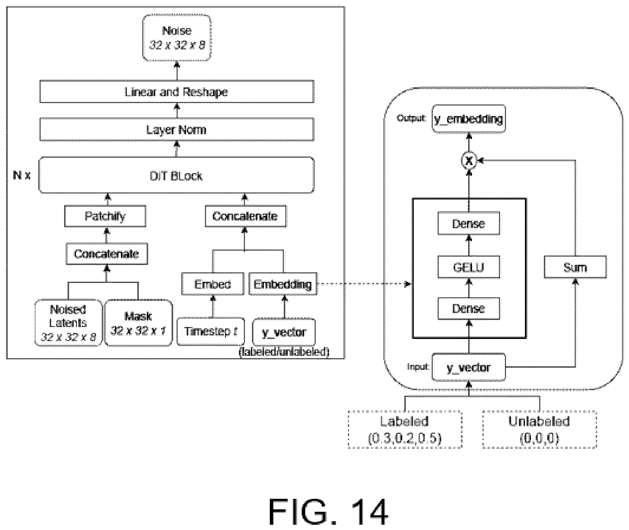

**Figure 14** illustrates an example embodiment of a network architecture with Dif-fusion transformer (DiT) blocks according to an embodiment of the present disclosure, wherein the illustration/diagram on the right side is a detail of the embedding block. The algorithm having this architecture may be trained both, with unlabeled and labeled images. For this purpose, at least one additional training set being marked as having an undefined regression may be provided. In this embodiment, both annotated (i.e., labeled) and un-annotated (i.e. unlabeled) images are used simultaneously for training to improve the generation of synthetic images by capturing their distinguishing features more efficiently. This allows to reduce the need for annotated data, and also to reduce the computation time. Like in the embodiment shown in **Figure 13,** this embodiment comprises a module with two dense layers and a GELU. In this embodiment, an embedding is created from the label information of the y-vector using convolutional layers. The labels are configured such that, when the input is a labelled image, the label sum will be 1 so that the embedding keeps its value (due to a multiplication with 1 after the dense-GELU-dense layers) and the network takes the label information into account. When the input is an unlabeled image, the label sum will be 0, so that the embedding will change its value to zeros and the network will disregard the label information (due to a multiplication with zero after the dense-GELU-dense layers). Optionally, any other type of mathematical projection may be used instead of the shown module.

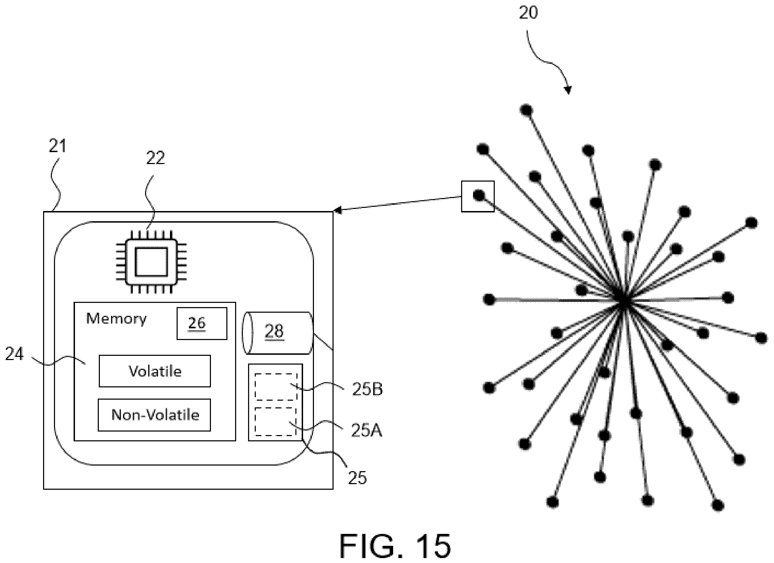

**Figures 15 to 17** illustrate different computing environments, central, decentral and distributed. The methods, apparatuses, computer elements of this disclosure may be implemented in decentral or at least partially decentral computing environments. In particular, for data sharing or exchange in ecosystems of multiple players different challenges exist. Data sovereignty may be viewed as a core challenge. It can be defined as a natural person's or corporate entity's capability of being entirely self-determined with regard to its data. To enable this particular capability related aspects, including requirements for secure and trusted data exchange in business ecosystems, may be implemented across the chemical value chain. In particular, chemical industry requires tailored solutions to deliver chemical products in a more sustainable way by using digital ecosystems. Providing, determining or processing of data may be realized by different computing nodes, which may be implemented in a centralized, a decentralized or a distributed computing environment.

**Figure 15** illustrates an example embodiment of a centralized computing system 20 comprising a central computing node 21 (filled circle in the middle) and several peripheral computing nodes 21.1 to 21.n (denoted as filled circles in the periphery). The term "computing system" is defined herein broadly as including one or more computing nodes, a system of nodes or combinations thereof. The term "computing node" is defined herein broadly and may refer to any device or system that includes at least one physical and tangible processor, and/or a physical and tangible memory capable of having thereon computer-executable instructions that are executed by a processor. Computing nodes are now increasingly taking a wide variety of forms. Computing nodes may, for example, be handheld devices, production facilities, sensors, monitoring systems, control systems, appliances, laptop computers, desktop computers, mainframes, data centers, or even devices that have not conventionally been considered a computing node, such as wearables (e.g., glasses, watches or the like). The memory may take any form and depends on the nature and form of the computing node.

In this example, the peripheral computing nodes 21.1 to 21.n may be connected to one central computing system (or server). In another example, the peripheral computing nodes 21.1 to 21.n may be attached to the central computing node via e.g. a terminal server (not shown). The majority of functions may be carried out by, or obtained from the central computing node (also called remote centralized location). One peripheral computing node 21.n has been expanded to provide an overview of the components present in the peripheral computing node. The central computing node 21 may comprise the same components as described in relation to the peripheral computing node 21.n.

Each computing node 21, 21.1 to 21.n may include at least one hardware processor 22 and memory 24. The term "processor" may refer to an arbitrary logic circuitry configured to perform basic operations of a computer or system, and/or, generally, to a device which is configured for performing calculations or logic operations. In particular, the processor, or computer processor may be configured for processing basic instructions that drive the computer or system. It may be a semi-conductor-based processor, a quantum processor, or any other type of processor configures for processing instructions. As an example, the processor may comprise at least one arithmetic logic unit ("ALU"), at least one floating-point unit ("FPU)", such as a math coprocessor or a numeric coprocessor, a plurality of registers, specifically registers configured for supplying operands to the ALU and storing results of operations, and a memory, such as an L1 and L2 cache memory. In particular, the processor may be a multicore processor. Specifically, the processor may be or may comprise a Central Processing Unit ("CPU"). The processor may be a ("GPU") graphics processing unit, ("TPU") tensor processing unit, ("CISC") Complex Instruction Set Computing microprocessor, Reduced Instruction Set Computing ("RISC") microprocessor, Very Long Instruction Word ("VLIW') microprocessor, or a processor implementing other instruction sets or processors implementing a combination of instruction sets. The processing means may also be one or more special-purpose processing devices such as an Application-Specific Integrated Circuit ("ASIC"), a Field Programmable Gate Array ("FPGA"), a Complex Programmable Logic Device ("CPLD"), a Digital Signal Processor ("DSP"), a network processor, or the like. The methods, systems and devices described herein may be implemented as software in a DSP, in a micro-controller, or in any other side-processor or as hardware circuit within an ASIC, CPLD, or FPGA. It is to be understood that the term processor may also refer to one or more processing devices, such as a distributed system of processing devices located across multiple computer systems (e.g., cloud computing), and is not limited to a single device unless otherwise specified.

The memory 24 may refer to a physical system memory, which may be volatile, non-volatile, or a combination thereof. The memory may include non-volatile mass storage such as physical storage media. The memory may be a computer-readable storage media such as RAM, ROM, EEPROM, CD-ROM, or other optical disk storage, magnetic disk storage, or other magnetic storage devices, non-magnetic disk storage such as solid-state disk or any other physical and tangible storage medium which can be used to store desired program code means in the form of computer-executable instructions or data structures and which can be accessed by the computing system. Moreover, the memory may be a computer-readable media that carries computer- executable instructions (also called transmission media). Further, upon reaching various computing system components, program code means in the form of computer-executable instructions or data structures can be transferred automatically from transmission media to storage media (or vice versa). For example, computer-executable instructions or data structures received over a network or data link can be buffered in RAM within a network interface module (e.g., a "NIC"), and then eventually transferred to computing system RAM and/or to less volatile storage media at a computing system. Thus, it should be understood that storage media can be included in computing components that also (or even primarily) utilize transmission media.

The computing nodes 21, 21.1 to 21.n may include multiple structures 26 often referred to as an "executable component, executable instructions, computer-executable instructions or instructions". For instance, memory 24 of the computing nodes 21, 21.1 to 21.n may be illustrated as including executable component 26. The term "executable component" or any equivalent thereof may be the name for a structure that is well understood to one of ordinary skill in the art in the field of computing as being a structure that can be software, hardware, or a combination thereof or which can be implemented in software, hardware, or a combination. For instance, when implemented in software, one of ordinary skill in the art would understand that the structure of an executable component includes software objects, routines, methods, and so forth, that is executed on the computing nodes 21, 21.1 to 21.n, whether such an executable component exists in the heap of a computing node 21, 21.1 to 21.n, or whether the executable component exists on computer-readable storage media. In such a case, one of ordinary skill in the art will recognize that the structure of the executable component exists on a computer-readable medium such that, when interpreted by one or more processors of a computing node 21, 21.1 to 21.n (e.g., by a processor thread), the computing node 21, 21.1 to 21n is caused to perform a function. Such a structure may be computer-readable directly by the processors (as is the case if the executable component were binary). Alternatively, the structure may be structured to be interpretable and/or compiled (whether in a single stage or in multiple stages) so as to generate such binary that is directly interpretable by the processors. Such an understanding of example structures of an executable component is well within the understanding of one of ordinary skill in the art of computing when using the term "executable component". Examples of executable components implemented in hardware include hardcoded or hard-wired logic gates, that are implemented exclusively or near-exclusively in hardware, such as within a field- programmable gate array (FPGA), an application-specific integrated circuit (ASIC), or any other specialized circuit. In this description, the terms "component", "agent", "manager", "service", "engine", "module", "virtual machine" or the like are used synonymous with the term "executable component".

The processor 22 of each computing node 21, 21.1 to 21.n may direct the operation of each computing node 21, 21.1 to 21.n in response to having executed computer-executable instructions that constitute an executable component. For example, such computer-executable instructions may be embodied on one or more computer-readable media that form a computer program product. The computer-executable instructions may be stored in the memory 24 of each computing node 21, 21.1 to 21.n. Computer-executable instructions comprise, for example, instructions and data which, when executed at a processor 21, cause a general-purpose computing node 21, 21.1 to 21.n, special purpose computing node 21, 21.1 to 21.n, or special purpose processing device to perform a certain function or group of functions. Alternatively or in addition, the computer-executable instructions may configure the computing node 21, 21.1 to 21.n to perform a certain function or group of functions. The computer executable instructions may be, for example, binaries or even instructions that undergo some translation (such as compilation) before direct execution by the processors, such as intermediate format instructions such as assembly language, or even source code.

Each computing node 21, 21.1 to 21.n may contain communication channels 28 that allow each computing node 21.1 to 21.n to communicate with the central computing node 21, for example, a network (depicted as solid line between peripheral computing nodes and the central computing node in Figure 15). A "network" may be defined as one or more data links that enable the transport of electronic data between computing nodes 21, 21.1 to 21.n and/or modules and/or other electronic devices. When information is transferred or provided over a network or another communications connection (either hardwired, wireless, or a combination of hardwired or wireless) to a computing node 21, 21.1 to 21.n, the computing node 21, 21.1 to 21.n properly views the connection as a transmission medium. Transmission media can include a network and/or data links which can be used to carry desired program code means in the form of computer-executable instructions or data structures and which can be accessed by a general-purpose or special-purpose computing nodes 21, 21.1 to 21.n. Combinations of the above may also be included within the scope of computer-readable media.

The computing node(s) 21, 21.1 to 21.n may further comprise a user interface system 25 for use in interfacing with a user. The user interface system 25 may include output mechanisms 25A as well as input mechanisms 25B. The principles described herein are not limited to the precise output mechanisms 25A or input mechanisms 25B as such will depend on the nature of the device. However, output mechanisms 25A might include, for instance, displays, speakers, displays, tactile output, holograms and so forth. Examples of input mechanisms 25B might include, for instance, microphones, touchscreens, holograms, cameras, keyboards, mouse or other pointer input, sensors of any type, and so forth.

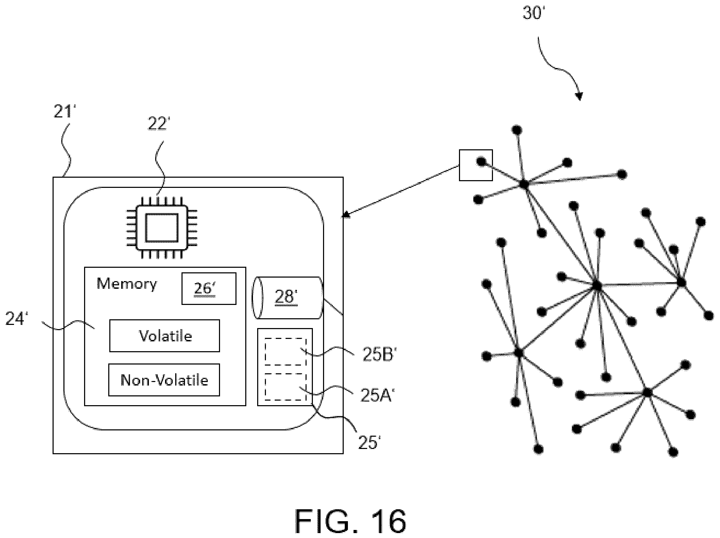

**Figure 16** illustrates an example embodiment of a decentralized computing environment 30 with several computing nodes 21.1 to 21.n denoted as filled circles. In contrast to the centralized computing environment 20 illustrated in Figure 15, the computing nodes 21.1 to 21.n of the decentralized computing environment are not connected to a central computing node 21 and are thus not under control of a central computing node. Instead, resources, both hardware and software, may be allocated to each individual computing node 21.1 to 21.n (local or remote computing system) and data may be distributed among various computing nodes 21.1 to 21.n to perform the tasks. Thus, in a decentral system environment, program modules may be located in both local and remote memory storage devices. One computing node 21 has been expanded to provide an overview of the components present in the computing node 21. In this example, the computing node 21 comprises the same components as described in relation to **Figure 15.**

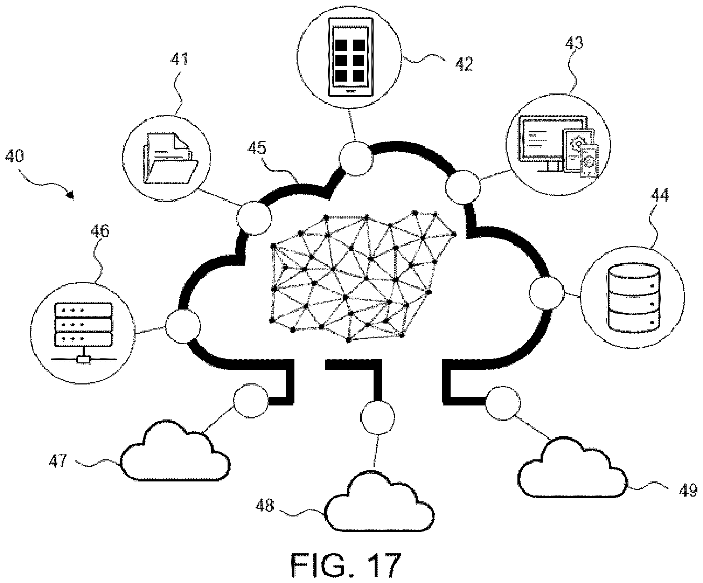

**Figure 17** illustrates an example embodiment of a distributed computing environment 40. In this description, "distributed computing" may refer to any computing that utilizes multiple computing resources. Such use may be realized through virtualization of physical computing resources. One example of distributed computing is cloud computing. "Cloud computing" may refer a model for enabling on-demand network access to a shared pool of configurable computing resources (e.g., networks, servers, storage, applications, and services). When distributed, cloud computing environments may be distributed internationally within an organization and/or across multiple organizations. In this example, the distributed cloud computing environment 40 may contain the following computing resources: mobile device(s) 42, applications 43, databases 44, data storage and server(s) 46. The cloud computing environment 40 may be deployed as public cloud 47, private cloud 48 or hybrid cloud 49. A private cloud 47 may be owned by an organization and only the members of the organization with proper access can use the private cloud 48, rendering the data in the private cloud at least confidential. In contrast, data stored in a public cloud 48 may be open to anyone over the internet. The hybrid cloud 49 may be a combination of both private and public clouds 47, 48 and may allow to keep some of the data confidential while other data may be publicly available.

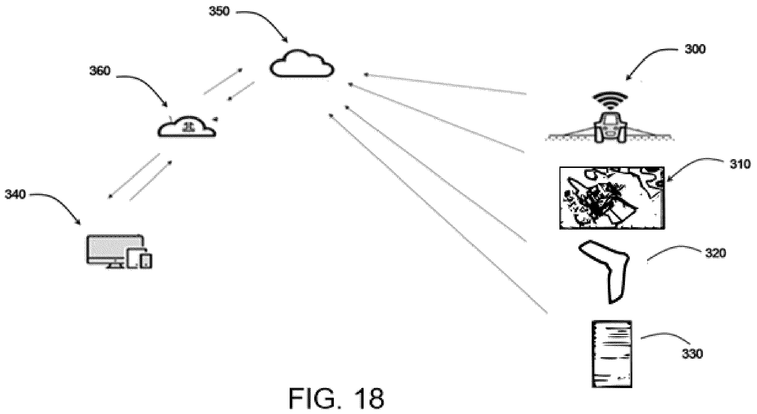

**Figure 18** illustrates exemplarily the different possibilities to receive and process field data. For example, field data can be obtained by all kinds of agricultural equipment 300 (e.g. a tractor 300) as so-called as-applied maps by recording the application rate at the time of application. It is also possible that such agricultural equipment comprises sensors (e.g. optical sensors, cameras, infrared sensors, soil sensors, etc.) to provide, for example, a weed distribution map. It is also possible that during harvesting the yield (e.g. in the form of biomass) is recorded by a harvesting vehicle 310. Furthermore, corresponding maps/data can be provided by land-based and/or airborne drones 320 by taking images of the field or a part of it. Finally, it is also possible that a geo-referenced visual assessment 330 is performed and that this field data is also processed. Field data collected in this way can then be merged in a computing device 340, where the data can be transmitted and computed, for example, via any wireless link, cloud applications 350 and/or working platforms 360, wherein the field data may also be processed in whole or in part in the cloud application 350 and/or in the working platform 360 (e.g., by cloud computing).

Aspects of the present disclosure relate to computer program elements configured to carry out steps of the methods described above. The computer program element might therefore be stored on a computing unit of a computing device, which might also be part of an embodiment. This computing unit may be configured to perform or induce performing of the steps of the method described above. Moreover, it may be configured to operate the components of the above-described system. The computing unit can be configured to operate automatically and/or to execute the orders of a user. The computing unit may include a data processor. A computer program may be loaded into a working memory of a data processor. The data processor may thus be equipped to carry out the method according to one of the preceding embodiments. This exemplary embodiment of the present disclosure covers both, a computer program that right from the beginning uses the present disclosure and computer program that by means of an update turns an existing program into a program that uses the present disclosure. Moreover, the computer program element might be able to provide all necessary steps to fulfill the procedure of an exemplary embodiment of the method as described above. According to a further exemplary embodiment of the present disclosure, a computer readable medium, such as a CD-ROM, USB stick, a downloadable executable or the like, is presented wherein the computer readable medium has a computer program element stored on it which computer program element is described by the preceding section. A computer program may be stored and/or distributed on a suitable medium, such as an optical storage medium or a solid-state medium supplied together with or as part of other hardware, but may also be distributed in other forms, such as via the internet or other wired or wireless telecommunication systems. However, the computer program may also be presented over a network like the World Wide Web and can be downloaded into the working memory of a data processor from such a network. According to a further exemplary embodiment of the present disclosure, a medium for making a computer program element available for downloading is provided, which computer program element is arranged to perform a method according to one of the previously described embodiments of the present disclosure.

The present disclosure has been described in conjunction with a preferred embodiment as examples as well. However, other variations can be understood and effected by those persons skilled in the art and practicing the claimed invention, from the studies of the drawings, this disclosure and the claims. Notably, in particular, the any steps presented can be performed in any order, i.e. the present invention is not limited to a specific order of these steps. Moreover, it is also not required that the different steps are performed at a certain place or at one node of a distributed system, i.e. each of the steps may be performed at a different node using different equipment/data processing units.

As used herein "determining" also includes "estimating, calculating, initiating or causing to determine", "generating" also includes "initiating or causing to generate", and "providing" also includes "initiating or causing to determine, generate, select, send, query or receive".

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Computer-implemented method for generating a synthetic image of an object having at least one regression state, comprising:

   receiving at least one regression value, wherein the at least one regression value describes the at least one regression state of the object;
   providing a trained algorithm configured to provide an output image of an object in at least one regression state based on at least one regression value;
   applying the trained algorithm on the at least one regression value, wherein the output of the trained algorithm is an output image of the object in the at least one regression state.

2. Computer-implemented method according to claim 1,

   wherein the object is a plant, part of a plant or a plant leaf and wherein
   the at least one regression state comprises at least one of the following: a stage of a plant disease, a level of water of the plant, a plant age, a quality level of a plant, a plant vigour and/or a growing stage of a plant, wherein the regression value preferably corresponds to the stage of a plant disease describing a stage of infection of a plant by referencing a percentage of damage.

3. Computer-implemented method according claim 1 or claim 2,

wherein, in addition to the at least one regression value, a segmentation mask describing an outline of the object is received;
wherein the trained algorithm is applied on both, the at least one regression value and the segmentation mask, such that the object in the output image has an outline according to the segmentation mask.

4. Computer-implemented method according to any one of the preceding claims,

wherein the trained algorithm comprises at least one diffusion model;
wherein the diffusion model is configured to receive the at least one regression value and use it as a conditional value in a denoising process of the diffusion model; and
wherein the diffusion model is preferably applied in latent space; and
the trained algorithm preferably comprises a decoder algorithm that transforms the output of the diffusion model from latent space into an image in pixel space.

5. Computer-implemented method according to claim 4,
wherein the diffusion model is a transformer-based diffusion model comprising Diffusion Transformer blocks (DiT).

6. Computer-implemented method according to claim 4 or claim 5,

wherein a spatial representation of noise in latent space is concatenated with the segmentation mask before the denoising process is applied;
wherein a spatial representation of noise in latent space, optionally concatenated with the segmentation mask, is preferably converted into a sequence of tokens before the denoising process is applied.

7. Computer-implemented method for training an algorithm to generate a synthetic image of an object having at least one regression state, comprising:

providing an algorithm;
receiving training data comprising regression training sets, wherein the regression training sets comprising a reference image and at least one regression value, respectively, wherein the reference images of the sets depict objects in different regression states and the regression values describe the regression states;
training the algorithm with the training data to generate output images of objects in a regression state corresponding to at least one input regression value.

8. Computer-implemented method according to claim 7,

wherein the algorithm comprises a diffusion model, the diffusion model comprising a diffusion process and a denoising process;
wherein the training comprises:

the diffusion model applying noise to a representation of the reference image in a plurality of steps in the diffusion process; and
the diffusion model learning to denoise the noised representation of the reference image in the denoising process, wherein the at least one regression value is an input parameter in the denoising process.

9. Computer-implemented method according to claim 7 or claim 8,

wherein the algorithm further comprises a variational autoencoder;
wherein, prior to training of the diffusion model, the variational autoencoder is trained to transform reference images into a latent representation of the reference images in latent space and transform a latent representation of images into images in pixel space;
wherein, after training the variational autoencoder, the trained variational autoencoder is used to provide latent representations of the reference images in latent space;
wherein the diffusion model is trained in latent space using the latent representations of the reference images.

10. Computer-implemented method according to any one of claims 7 to 9,

   wherein the training sets further comprise a segmentation mask describing an outline of the object, respectively;
   wherein the segmentation mask is preferably a further input parameter for the denoising process.

11. Computer-implemented method according to any one of claims 7 to 10,

   wherein the training data further comprise unlabeled training sets, wherein the unlabeled training sets comprising a reference image;
   wherein, prior to training the algorithm with the regression training sets, the algorithm is pre-trained with the unlabeled training sets without an input of a regression level to generate output images of objects.

12. Computer-implemented method according to any one of claims 7 to 11,

   wherein the regression training sets comprise a plurality of regression level values describing different forms of regression, respectively;
   wherein the algorithm is trained to generate output images of objects in a plurality of different forms of regression states corresponding to the different input regression values.

13. System for generating a synthetic image of an object, in particular a plant image of a plant or a part of a plant, having at least one regression state, comprising:

   a processing circuitry (11);
   a storage medium (12); and
   a data interface (13);
   wherein the storage medium (12) comprises a computer program that comprises instructions which when the program is executed, cause the processing circuitry (11) to carry out the method according to any one of claims 1 to 12;
   wherein the data interface (13) is configured to receive input for the trained algorithm including the at least one regression value.

14. Computer program element with instructions, which, when executed on computing devices of a computing environment, is configured to carry out the steps of the methods according to any one of the claims 1 to 12 and/or in a system according to claim 13.

15. Use of synthetic images of an object having at least one regression state generated with a method according to any one of the claims 1 to 12 as training data for an algorithm to recognize a regression state of an object.

providing an algorithm

receiving training data comprising regression training sets

training the algorithm with the training data

FIG. 1

receiving at least one regression value

providing a trained algorithm

applying the trained algorithm on the at least one regression value

FIG. 2

FIG. 3

FIG. 4

FIG. 5

FIG. 6

Pix2Pix-GD

FIG. 7

Diffusion Pix2Pix

Gaussian diffusion process

Denoising process

$z_{T-n}$ ... $z_{T-2}$ $z_{T-1}$

Latent space

$z_T$

$z_T$

Label

Mask

VAE

E

D

z

z'

x

x'

Pixel space

FIG. 8

FIG. 9

FIG. 10

FIG. 11

FIG. 12

FIG. 13

FIG. 14

20

FIG. 15

22
21
24
Memory
26
Volatile
Non-Volatile
28
25B
25A
25

FIG. 16

EP 4 513 445 A1

FIG. 17

FIG. 18

Europäisches
Patentamt

European
Patent Office

Office européen
des brevets

# EUROPEAN SEARCH REPORT

Application Number

EP 23 19 2562

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HU GENSHENG ET AL: "A low shot learning method for tea leaf's disease identification", COMPUTERS AND ELECTRONICS IN AGRICULTURE, [Online] vol. 163, 27 June 2019 (2019-06-27), page 104852, XP093111780, AMSTERDAM, NL ISSN: 0168-1699, DOI: 10.1016/j.compag.2019.104852 Retrieved from the Internet: URL:https://pdf.sciencedirectassets.com/271304/1-s2.0-S0168169919X00071/1-s2.0-S0168169919300407/main.pdf?X-Amz-Security-Token=IQoJb3JpZ2luX2VjEMr/////////wEaCXVzLWVhc3QtMSJHMEUCIQCa8wvfuz6O0v9EM1JdVqz0foy9pR8K1Dbh5hCzkHXJgAIgRk9r3JyiR/knVW/8UwpTKNo2oBZdO3sLTeXPaWwFxJYqsgUIQxAFGgwwNTkwMDM1NDY4NjU 4NjUiDOUh+> [retrieved on 2023-12-13] | 1-3,7, 10-15 | INV. G06V10/774 G06V10/82 G06V20/68 |
| Y | * Title * * abstract * * figure 1 * * 2.3.2 C-DCGAN; page 3; figure 3 * | 4-6,8,9 | TECHNICAL FIELDS SEARCHED (IPC) G06V |
| Y | WILLIAM PEEBLES ET AL: "Scalable Diffusion Models with Transformers", ARXIV.ORG, CORNELL UNIVERSITY LIBRARY, 201 OLIN LIBRARY CORNELL UNIVERSITY ITHACA, NY 14853, 2 March 2023 (2023-03-02), XP091449791, * the whole document * | 4-6,8,9 | |

-/--

The present search report has been drawn up for all claims

| Place of search | Date of completion of the search | Examiner |
|---|---|---|
| The Hague | 14 December 2023 | Meier, Ueli |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 19 2562

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LU YUZHEN ET AL: "Generative adversarial networks (GANs) for image augmentation in agriculture: A systematic review", COMPUTERS AND ELECTRONICS IN AGRICULTURE, ELSEVIER, AMSTERDAM, NL, vol. 200, 2 August 2022 (2022-08-02), XP087157536, ISSN: 0168-1699, DOI: 10.1016/J.COMPAG.2022.107208 [retrieved on 2022-08-02] * page 5, left-hand column, paragraph 1 * * the whole document * | 1-15 | |
| A | HASEEB NAZKI ET AL: "Unsupervised Image Translation using Adversarial Networks for Improved Plant Disease Recognition", ARXIV.ORG, CORNELL UNIVERSITY LIBRARY, 201 OLIN LIBRARY CORNELL UNIVERSITY ITHACA, NY 14853, 26 September 2019 (2019-09-26), XP081483484, * the whole document * | 1-15 | |
| A | CAP QUAN HUU ET AL: "LeafGAN: An Effective Data Augmentation Method for Practical Plant Disease Diagnosis", IEEE TRANSACTIONS ON AUTOMATION SCIENCE AND ENGINEERING, vol. 19, no. 2, 17 December 2020 (2020-12-17), pages 1258-1267, XP093111795, US ISSN: 1545-5955, DOI: 10.1109/TASE.2020.3041499 * the whole document * | 1-15 | TECHNICAL FIELDS SEARCHED (IPC) |

-/--

The present search report has been drawn up for all claims

| Place of search | Date of completion of the search | Examiner |
|---|---|---|
| The Hague | 14 December 2023 | Meier, Ueli |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt / European Patent Office / Office européen des brevets | **EUROPEAN SEARCH REPORT** | Application Number |
|---|---|---|---|
| | | | **EP 23 19 2562** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROMBACH ROBIN ET AL: "High-Resolution Image Synthesis with Latent Diffusion Models", 2022 IEEE/CVF CONFERENCE ON COMPUTER VISION AND PATTERN RECOGNITION (CVPR), IEEE, 18 June 2022 (2022-06-18), pages 10674-10685, XP034194085, DOI: 10.1109/CVPR52688.2022.01042 [retrieved on 2022-09-27] * the whole document * | 1-15 | |

TECHNICAL FIELDS SEARCHED (IPC)

The present search report has been drawn up for all claims

| Place of search | Date of completion of the search | Examiner |
|---|---|---|
| The Hague | 14 December 2023 | Meier, Ueli |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. F. CHAN** ; **L. A. VESE**. Active contours without edges. *IEEE Transactions on Image Processing*, February 2001, vol. 10 (2), 266-277
- **A. JOHANNES** ; **A. PICON et al.** Automatic plant disease diagnosis using mobile capture devices, applied on a wheat use case. *Computers and Electronics in Agriculture*, 2017, vol. 138, ISSN 0168-1699, 200-209
- **J. HO** ; **A. JAIN** ; **P. ABBEEL**. Denoising diffusion probabilistic models. *Advances in Neural Information Processing Systems*, 2020, vol. 33, 6840-6851
- U-net: Convolutional Networks for Biomedical Image Segmentation. **O. RONNEBERGER** ; **P. FISCHER** ; **T. BROX**. International Conference on Medical image computing and computer-assisted intervention. Springer, 2015, 234-241
- **W. PEEBLES** ; **S. XIE**. Scalable Diffusion Models with Transformers. *arXiv:2212.09748v2*, 2023

- **A. DOSOVITSKIY** ; **L. BEYER** ; **A. KOLESNIKOV** ; **D. WEISSENBORN** ; **X. ZHAI** ; **T. UNTERTHINER** ; **M. DEHGHANI** ; **M. MINDERER** ; **G. HEIGOLD** ; **S. GELLY et al.** An image is worth $16\times16$ words: Transformers for image recognition at scale,. *arXiv preprint arXiv:2010.11929*, 2020
- **A. PICON** ; **A. ALVAREZ-GILA** ; **M. SEITZ** ; **A. ORTIZ-BARREDO** ; **J. ECHAZARRA** ; **A. JO-HANNES**. Deep convolutional neural networks for mobile capture device-based crop disease classification in the wild. *Computers and Electronics in Agriculture*, 2019, vol. 161, 280-290
- **M. HEUSEL** ; **H. RAMSAUER** ; **T. UNTERTHINER** ; **B. NESSLER** ; **S. HOCHREITER**. Gans trained by a two time-scale update rule converge to a local nash equilibrium,. *Advances in neural information processing systems*, 2017, vol. 30
- **T. KYNKÄÄNNIEMI** ; **T. KARRAS** ; **S. LAINE** ; **J. LEHTINEN** ; **T. AILA**. Improved precision and recall metric for assessing generative models. *Advances in Neural Information Processing Systems*, 2019, vol. 32
- **L. VAN DER MAATEN** ; **G. HINTON**. Visualizing data using 1093 t-sne.. *Journal of machine learning research*, 2008, vol. 9 (11), 1094